# EUROPEAN PATENT SPECIFICATION

(11) **EP 2 253 559 B1**
(45) Date of publication and mention of the grant of the patent: **18.01.2012**
(21) Application number: 10163678.5
(22) Date of filing: 21.05.2010
(51) Int. Cl.: B65D 81/34, B65D 1/36, B65D 43/02, B65D 81/32

(54) **Multi-component packaging system and apparatus**
Mehrkomponenten-Verpackungssystem und -vorrichtung
Système de conditionnement à plusieurs composants et appareil

(30) Priority: 22.05.2009 US 471114
(43) Date of publication of application: 24.11.2010
(73) Proprietor: ConAgra Foods RDM, Inc., Omaha, NE 68102 (US)
(72) Inventor: Shapiro, Catherine M., Omaha, NE 68135 (US); Berends, Corey L., Omaha, NE 68135 (US); Degner, Brian M., Omaha, NE 68136 (US); Sweley, Jess C., Omaha, NE 68124 (US); Bills, Stephanie L., Halifax, PA 17032 (US); Branda, Christopher M., Lewisburg, PA 17837 (US); Folta, Kim M., Omaha, NE 68102 (US); Kim, Robert, Atlanta, GA 30346 (US); Lai, Sue, Chicago, IL 60610 (US); Poulis, Pamela A., Lewisburg, PA 17837 (US); Spungin, Jesse Jay, Chicago, IL 60607 (US); Bartholomew, Catherine M., Wheaton, IL 60189 (US); Deakin, Lynda A., Oakland, CA 94602 (US); Holscher, Todd T. S., Bentonville, AR 72712 (US); Hwang, Grace J., Menlo Park, CA 94025 (US); Kavanagh, Mark M., Omaha, NE 68132 (US); Lee, Michelle S. K., San Francisco, CA 94110 (US); Mack, Adam M., Menlo Park California 94025 (US); Morgan, Eleanor D., Boston, MA 02118 (US); Smith, John W., San Francisco, CA 94116 (US); Thomsen, David C., San Mateo, CA 94401 (US); Trionfi, Gabriel M., San Carlos, CA 94070 (US); Chang, Ana T. Yuan, Sunnyvale, CA 94086 (US); Singh, Prem S., Glen Ellyn, IL 60137 (US)
(74) Representative: Hamer, Christopher K.

(56) References cited:
- US-A1- 2008 210 686

## Description

### BACKGROUND

Since the development of the microwave oven, there has been a continuing consumer desire for microwave ready packaged meals. However, consumers desire packaged meals that are convenient to use, cooked evenly by the microwave, and taste like homemade food. Consumers additionally desire the packaged meals to be efficient and economic in use.

### SUMMARY

An aspect of the present disclosure relates to a multi-component packaing system according to claim 1.

Another aspect of the present disclosure relates to an anti-foam composition according to claim 12 for managing foam formation and preventing boil-over in a container assembly of the present disclosure for a microwavable food product. When a fluid such as water is used to cook starch-based food components, such as rice, beans, pasta, or grains, in a container assembly of the present disclosure, foam develops on the top surface of the fluid during boiling as a result of starches and proteins in the starch-based food component. As the foam continues to develop, the foam can boil-over the edge of the container assembly thereby creating a spill on a bottom surface of the microwave. Conventional anti-foam compositions were tested in a container assembly of the present disclosure and found to be inefficient at preventing the boil-over of foam. The anti-foam compositions of the present disclosure exhibit enhanced foam suppression and foam breaking activity compared to the conventional anti-foam compositions and prevent boil-over in container assemblies of the present disclosure.

It will be understood that the term "fluid" as used in the present disclosure is not limited to liquids, but rather includes liquids, gases, and vapors.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### DRAWINGS

FIG. 1A is a perspective view of a multi-component packaging system having features that are examples of aspects in accordance with the principles of the present disclosure.

FIG. 1B is a perspective view of the multi-component packaging system of FIG. 1A with an upper containing assembly removed from the lower containing assembly.

FIG. 2A is a perspective view of an alternate example of a multi-component packaging system having features that are examples of aspects in accordance with the principles of the present disclosure.

FIG. 2B is a perspective view of the multi-component packaging assembly of FIG. 2A with a multi-functional layer partially removed.

FIG. 3A is a perspective view of an alternate example of the multi-component packaging system of FIG. 2A.

FIG. 3B is an exploded perspective view of the multi-component packaging system of FIG. 3A.

FIG. 4 is a perspective view of a multi-compartment containing assembly having features that are examples of aspects in accordance with the principles of the present disclosure.

FIG. 5 is a perspective view of an alternate example of the multi-compartment containing assembly of FIG. 4.

FIG. 6 is a perspective view of an alternate example of the multi-compartment containing assembly of FIG. 4 having a multi-functional layer.

FIG. 7 is a perspective view of an alternate example of the multi-compartment containing assembly of FIG. 4.

FIG. 8 is a perspective view of an alternate example of the multi-compartment containing assembly of FIG. 6.

FIG. 9 is a perspective view of an alternate example of the multi-component packaging system of FIG. 1A having an exterior packaging.

FIG. 10 is a perspective view of an assembled alternate example of multi-component packaging system of FIG. 1A.

FIG. 11 is a perspective view of an assembled alternate example of multi-component packaging system of FIG. 1A.

FIG. 12 is a perspective view of an assembled alternate example of multi-component packaging system of FIG. 1A.

FIG. 13 is a perspective view of an assembled alternate example of multi-component packaging system of FIG. 1A.

FIG. 14 is a perspective view of an assembled alternate example of multi-component packaging system of FIG. 1A.

FIG. 15 is a perspective view of a container suitable for use with the multi-compartment containing assembly of FIG. 6.

FIG. 16 is a perspective view of an alternate example of the container of FIG. 15.

FIG. 17 is a perspective view of an alternate example of the container of FIG. 15.

FIG. 18 is a perspective view of an alternate example of the container of FIG. 15.

FIG. 19 is a perspective view of an alternate example of the container of FIG. 15.

FIG. 20 is an exploded view of the multi-component packaging system of FIG. 1A.

FIG. 21 is a perspective view of an alternate example of the multi-component packaging system of FIG. 1A.

FIG. 22 is a perspective view of the multi-component packaging system of FIG. 21 with the upper and lower containing assemblies disengaged.

FIG. 23 is a perspective view of a fluid being added to the lower containing assembly of FIG. 22.

FIG. 24 is a perspective view of the lower containing assembly of FIG. 23 being inserted into a microwave oven for heating.

FIG. 25 is a perspective view of the fluid from the lower containing assembly of FIG. 24 being drained.

FIG. 26 is a perspective view of the contents of the upper containing assembly being added to the lower containing assembly.

FIG. 27 is a perspective view of an alternate example of a multi-component packaging system having features that are examples of aspects in accordance with the present disclosure.

FIG. 28 is a cross-section view of the multi-component packaging system of FIG. 27.

FIG. 29 is a perspective view of a base container suitable for use with the multi-component packaging system of FIG. 28.

FIG. 30 is a cross-sectional view of the base container of FIG. 29.

FIG. 31 is a top view of the base container of FIG. 29.

FIG. 32 is a cross-sectional view of a flange portion of the base container of FIG. 29 taken on line 32-32 of FIG. 31.

FIG. 33 is a cross-sectional view of a second handle of the base container of FIG. 29 taken on line 33-33 of FIG. 31.

FIG. 34 is a bottom view of the base container of FIG. 29.

FIG. 35 is a perspective view of a tray suitable for use with the multi-component packaging system of FIG. 27.

FIG. 36 is a top view of the tray of FIG. 35.

FIG. 37 is a right side view of the tray of FIG. 35.

FIG. 38 is a cross-sectional view of the tray of FIG. 35 taken on line 38-38 of FIG. 36.

FIG. 39 is a top view of the tray of FIG. 35 inserted into an interior cavity of the base container of FIG. 29.

FIG. 40 is a perspective view of a cover suitable for use with the multi-component packaging system of FIG. 29.

FIG. 41 is a top view of the cover of FIG. 40.

FIG. 42 is a cross-sectional view of the cover taken on line 42-42 of FIG. 41.

FIG. 43 is a cross-sectional view of a gripping portion of the cover taken on line 43-43 of FIG. 41.

FIG. 44 is a cross-sectional view of stacking arrangement of a plurality of multi-component packaging systems.

FIG. 45 is a cross-sectional view of an engaged cover and base container.

FIG. 46 is a cross-sectional view of the multi-component packaging system in which first and second food components are disposed.

FIG. 47 is a representation of a set of instructions suitable for use with the multi-component packaging system of FIG. 27.

FIG. 48 is a representation of an alternate example of a set of instructions suitable for use with the multi-component packaging system of FIG. 27.

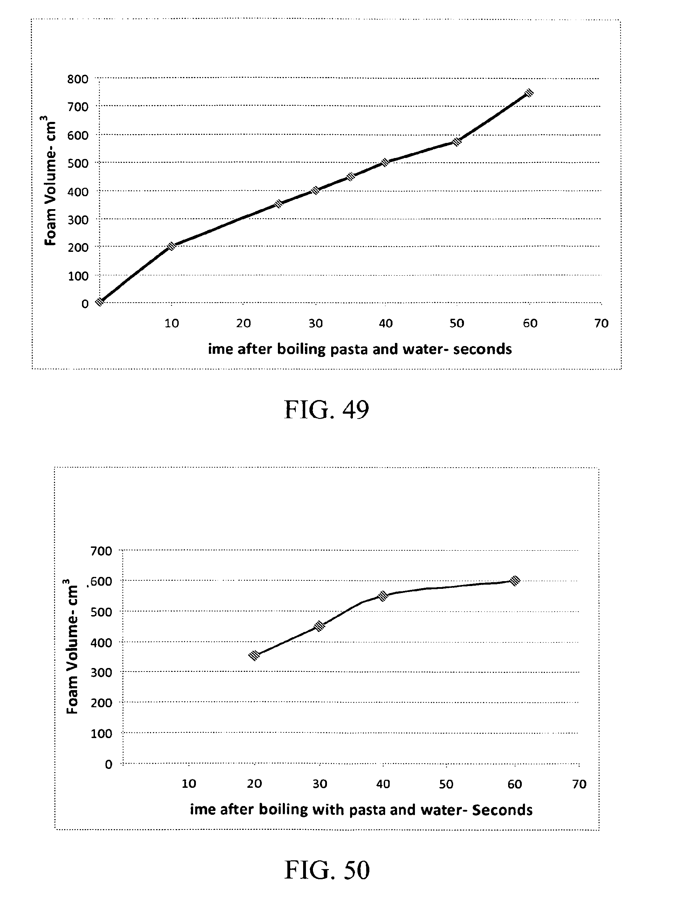

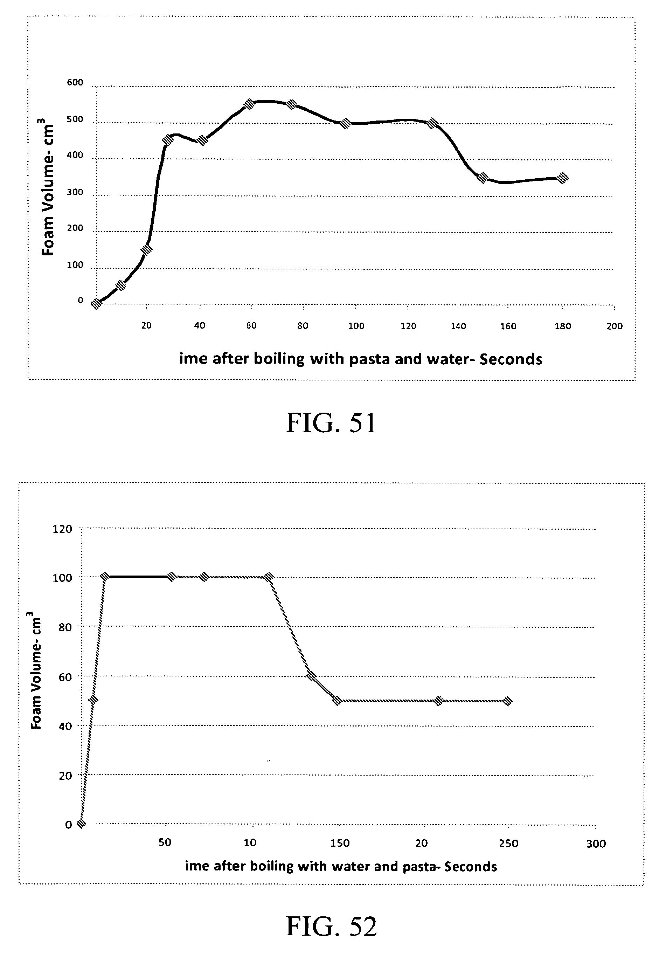

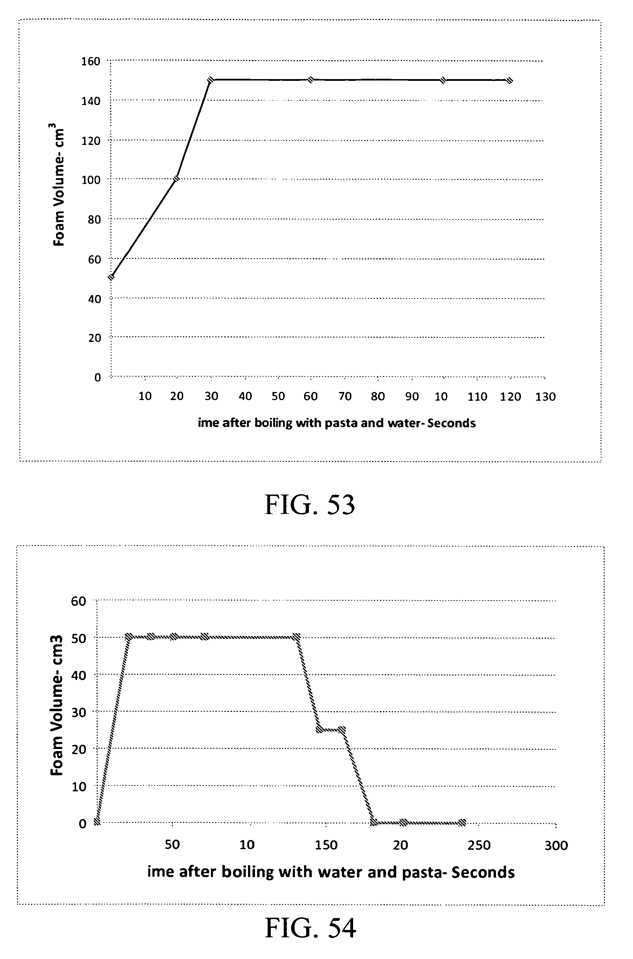

FIGS. 49-54 are data plots showing foam volume (cm³) as a function of time (seconds) after boiling pasta in water. In FIG. 49, no anti-foam agent was applied to the uncooked pasta prior to boiling. Dimethylsilioxane (silicon oil) was applied to the uncooked pasta in FIG. 50 prior to boiling. Silicon dioxide in canola oil was applied to the uncooked pasta in FIG. 51 prior to boiling. Acetylated monoglyceride (AMG) was applied to the uncooked pasta in FIG. 52 prior to boiling. Polyglyceryl-10 decaoleate was applied to the uncooked pasta in FIG. 53 prior to boiling. An anti-foam composition of the present disclosure was applied to the uncooked pasta in FIG. 54 prior to boiling.

FIGS. 55-57 show foam formation in a microwave ready pasta meal packaged in a multi-component packaging system of the present disclosure after microwave cooking of the meal. The pasta meal in FIG. 55 is a control and does not contain an anti-foam agent. The pasta meal in FIG. 56 contains acetylated monoglyceride (AMG) as an anti-foam agent. The pasta meal in FIG. 57 contains an anti-foam composition of the present disclosure.

FIG. 58 is a data plot showing the functionality score and bitterness score of experimental anti-foam compositions of the present disclosure plotted as a function of the fatty acid composition (%) of anti-foam compositions of the present disclosure.

FIG. 59 is a data plot showing temperature (°C) rise of water heated in an 1100 watt microwave oven and on a conventional stove top at the highest heat setting as a function of time (seconds).

### DETAILED DESCRIPTION

Reference will now be made in detail to the exemplary aspects of the present disclosure that are illustrated in the accompanying drawings. Wherever possible, the same reference numbers will be used throughout the drawings to refer to the same or like structure.

Given family commitments, work commitments, and household commitments, consumers rarely have time to prepare and clean-up after meals during the week. As a result, consumers may rely on microwave food products for their meals. While microwave food products are relatively easy to cook, what is desired is a microwave food product that is conveniently packaged for storage and cooking and that requires little clean-up after cooking.

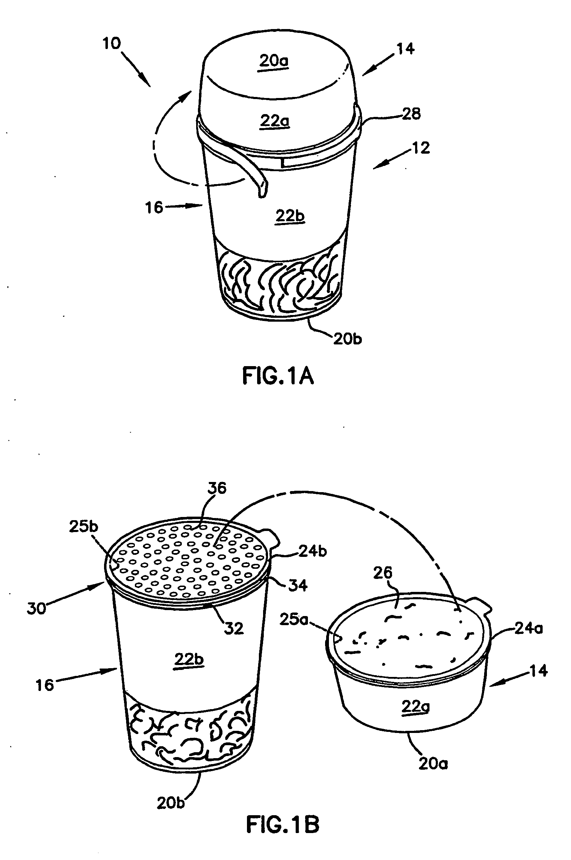

Referring now to FIGS. 1A and 1B, a multi-component packaging system, generally designated 10, is shown. The multi-component packaging system 10 provides a system that is conveniently packaged for storage and cooking and requires little clean-up after cooking.

In one aspect of the present disclosure, the multi-component packaging system 10 includes at least one containing assembly, generally designated 12. The containing assembly 12 may be suitable for separably containing a plurality of food components, including meats, seafoods, sauces, toppings, starches (e.g., pasta, rice, etc.), vegetables, potatoes, fruits, dairy products, and the like.

In one aspect of the present disclosure, the multi-component packaging system includes an upper containing assembly 14 and a lower containing assembly 16. The upper containing assembly 14 and the lower containing assembly 16 are formed from an upper base assembly and a lower base assembly, respectively. The upper base assembly includes a base 20a and a sidewall 22a. The lower base assembly includes a base 20b and a sidewall 22b. Each sidewall 22a, 22b is continuous with the base 20a, 20b, respectively, and terminates in a free edge 24a, 24b, respectively. The free edges 24a, 24b define openings 25a, 25b in the upper and lower containing assemblies 14, 16.

A polymeric film 26 may be used to cover at least one of the upper containing assembly 14 and the lower containing assembly 16. The polymeric film 26 is sufficiently affixed to the free edge 24a, 24b of the at least one of the upper and lower containing assemblies 14, 16 to serve as a splatter guard when the at least one of the upper and lower containing assemblies 14, 16 is placed into a microwave oven for heating of food.

Any of the upper and lower containing assemblies 14, 16 may include a cover 30. In one aspect of the present disclosure, the cover 30 includes multiple layers. The cover 30 can include a first layer 32 and a second layer 34. The first layer 32 defines a plurality of apertures 36. The plurality of apertures 36 allows the flow of fluid into and out of the containing assembly 14, 16 on which the first layer 32 is affixed while preventing the contents of that containing assembly 14, 16 from spilling out. As previously stated, the term "fluid" as used in the present disclosure shall be understood to include liquids, gases, and/or vapors.

The second layer 34 may hermetically seal the contents of the containing assembly 14, 16. It will be understood, however, that the scope of the present disclosure is not limited to the second layer 34 hermetically sealing the contents of the containing assembly 14, 16. The second layer 34 may be removed, such as by peeling away, to reveal the first layer 32.

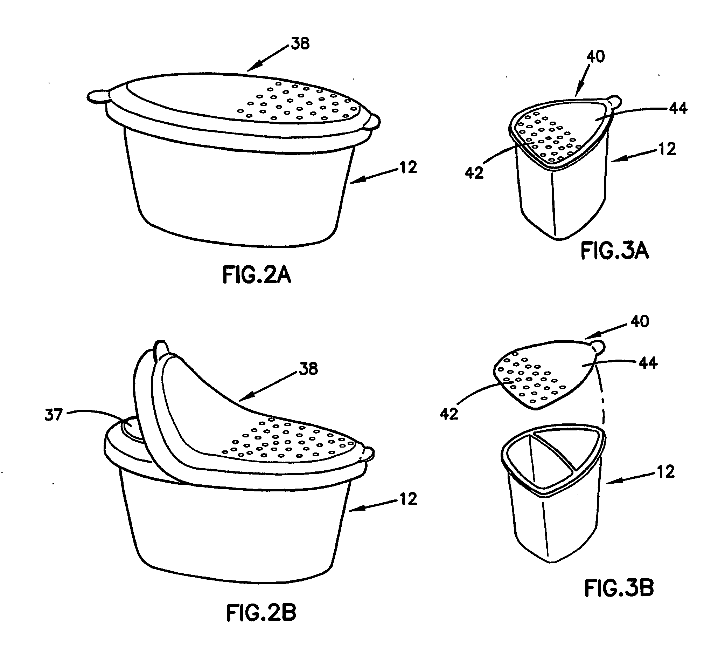

Referring now to FIGS. 2A and 2B, an alternate example of the cover 30 is shown. The containing assembly 12 may include a sealing layer 37 (shown in FIG. 2B) suitable for sealing the contents of the containing assembly 12 and a durable cover 38 suitable for providing ventilated heating of the contents of the upper containing assembly 12 when the sealing layer 37 has been removed.

Referring now to FIGS. 3A and 3B, the containing assembly 12 of the multi-component packaging system 10 may also include a multi-functional single layer 40, wherein a section of the containing assembly 12 is covered with a multi-aperture sealing layer 42 and a section of the containing assembly 12 is covered by a sealing layer 44, and a rigid cover that covers the multi-functional single layer 40. The multi-functional layer 40 may be formed of a single sheet of material and may be openable at more than one location and reclosable.

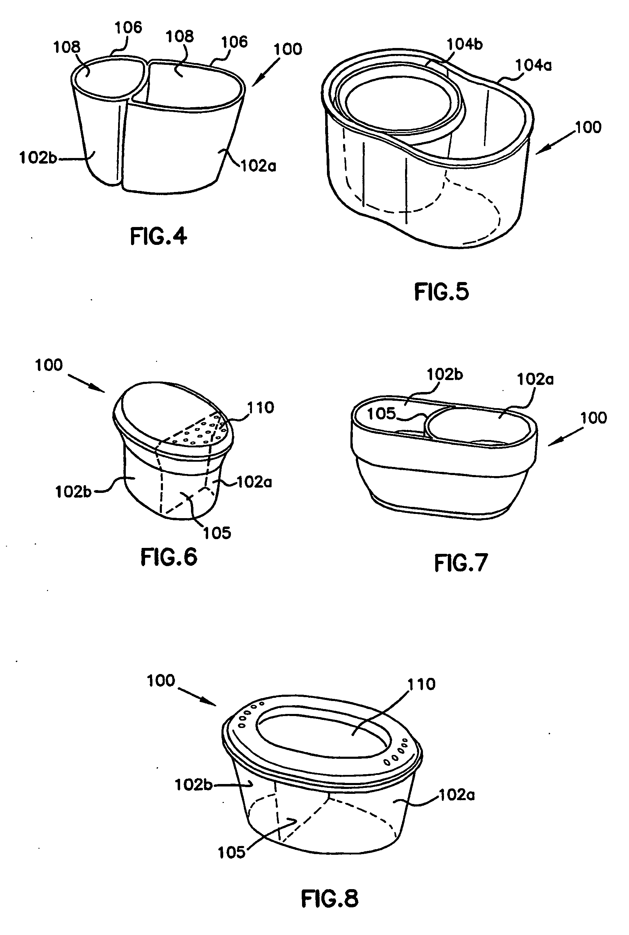

Referring now to FIGS. 4-8, an alternate example of a multi-component packaging assembly 100 is shown. The multi-component packaging assembly 100 includes at least two containing sections 102. In the depicted examples, the multi-component packaging assembly 100 includes a first containing section 102a and a second containing section 102b. Each of the containing sections 102 is usable to house a product suitable for use with the product housed in the other section but which is stored separately. In one aspect of the present disclosure, the containing assembly 100 may comprise an outer container 104a enclosing an inner container 104b having a perimeter that is less than the perimeter of the outer container 104a. In another aspect of the present disclosure, the containers 104 may be formed from a tray or a base and may be separated from one another by a barrier 105 (shown in FIGS. 4 and 6-8). The multi-component packaging assembly 100 may include any or all of the components of the upper and lower containing assemblies 14, 16.

Each of the containing sections 102 has a top portion 106 (shown in FIG. 4) with a sealable aperture 108 (shown in FIG. 4) that is opened to access the product disposed within the containing section 102. At least one of the containing sections 102 may include a multi-aperture sealing assembly 110 (shown in FIGS. 6 and 8).

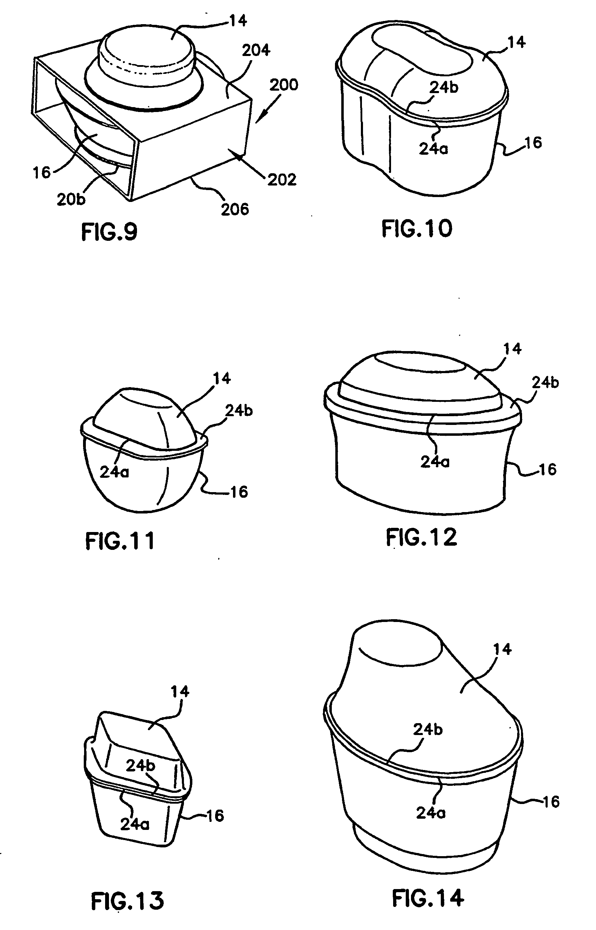

Referring now to FIG. 9, an exterior packaging 200 is shown. In one aspect of the present disclosure, the exterior packaging 200 is a sleeve that surrounds at least one of the upper and lower containing assemblies 14, 16. The exterior packaging includes a plurality of panels 202 having display surfaces. In the depicted example of FIG. 9, a first panel 204 is disposed adjacent to the opening 25b (shown in FIG. 1B) of the lower containing assembly 16 while an oppositely disposed second panel 206 is disposed adjacent to the base 20b of the lower containing assembly 16.

Referring now to FIGS. 1A and 10-14, examples of the assembled multi-component packaging system 10 are shown. The free edge 24b of the lower container assembly 16 may be coupled with either the free edge 24a or the base 20a of the upper assembly 14. In one aspect of the present disclosure, the upper and lower containing assemblies 14, 16 are releasable secured together such that the free edges 24a, 24b overlay one another to protect the plurality of apertures 36. In the depicted example of FIG. 1A, the upper containing assembly 14 is inverted and coupled with the lower containing assembly 16 via a coupling means 28 (e.g., a shrink wrap band, an adhesive, etc.).

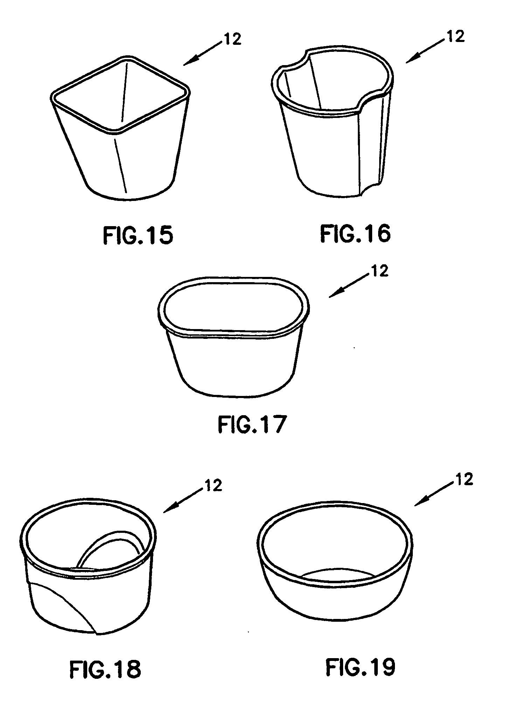

Referring now to FIGS. 15-19, alternate examples of the containing assembly 12 suitable for use with the multi-component packaging system 10 are shown. The containing assembly 12 may include various shapes and configurations including, but not limited to, those provided in FIGS. 15-19.

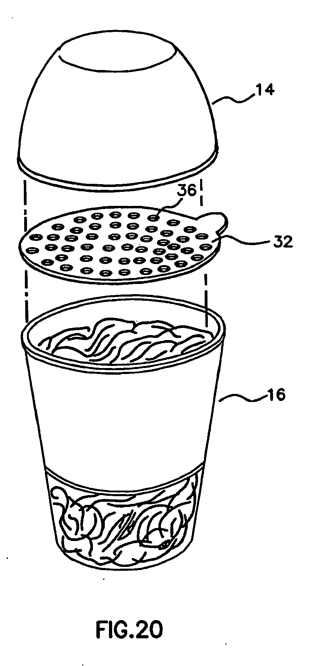

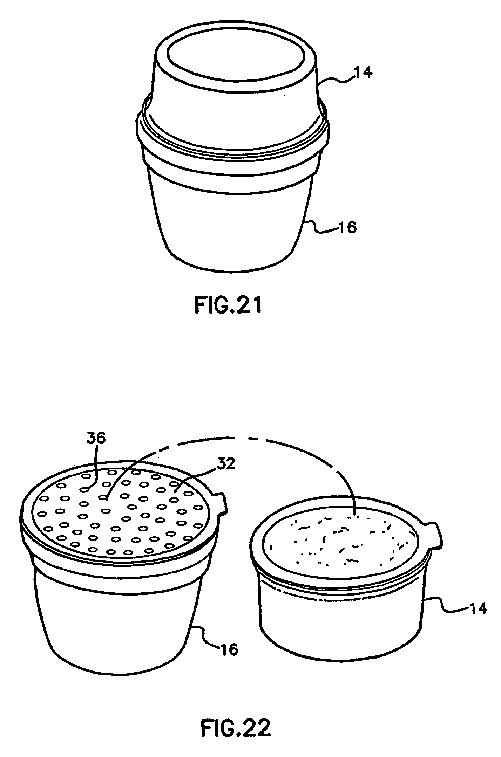

Referring now to FIGS. 20-26, a method of using the multi-component packaging system 10 will be described. As depicted in FIGS. 20-22, the upper and lower assemblies 14, 16 are separated from each other. In one aspect of the present disclosure, the exterior packaging 902 (shown in FIG. 9) or the coupling means 28 (shown in FIG. 1A) is removed in order to separate the upper and lower assemblies 14, 16. In the depicted example, the lower assembly 16 includes the first layer 32 having the plurality of apertures 36.

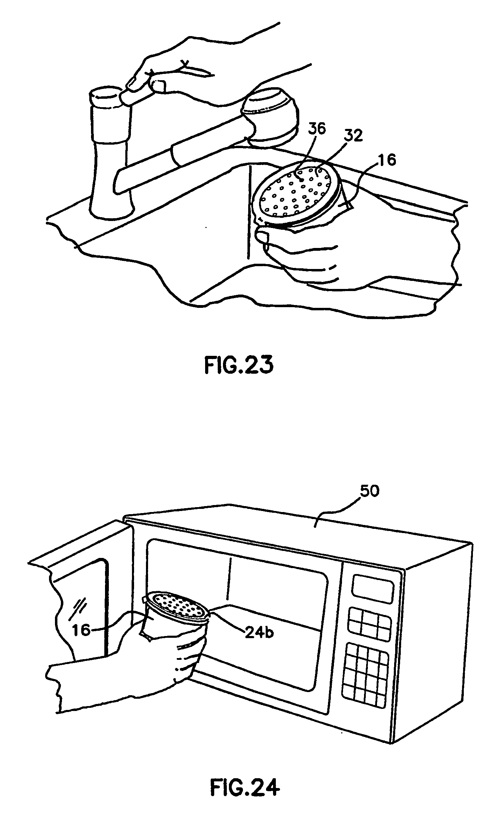

In FIG. 23, with the upper and lower assemblies 14, 16 separated, a fluid (e.g., water, broth, etc.) is added to the lower assembly 16 such that the fluid fills at least a portion of the lower assembly 16. In the depicted example of FIG. 23, the fluid is passed through the plurality of apertures 36 of the first layer 32. In another aspect of the present disclosure, the first layer 32 is removed from the lower assembly 16 so that the fluid can be added to the lower assembly 16 and then the first layer 32 is reapplied to the lower assembly 16.

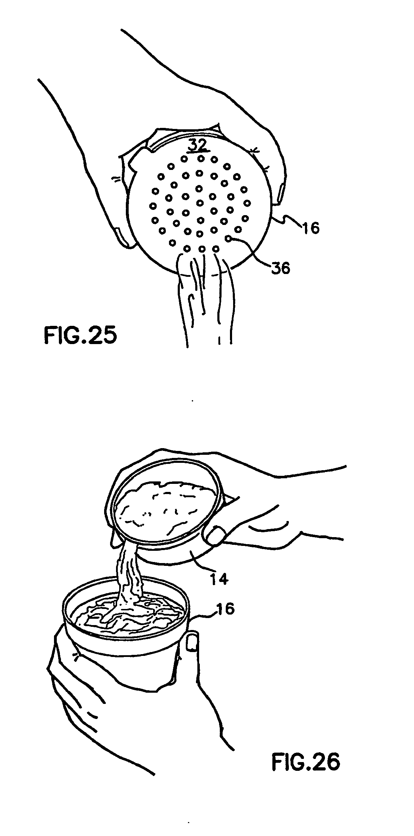

Referring now to FIGS. 24 and 25, the lower container 16 can be placed in a microwave oven 50 (shown in FIG. 24) for heating the contents of the lower container 16. After the contents of the lower container 16 are heated, the fluid within the lower containing assembly 16 can be drained (see FIG. 25) through the plurality of apertures 36 in the first layer 32. As the first layer 32 is engaged with the free edge 24b of the lower containing assembly 16, the food component within the lower containing assembly 16 is retained within the lower containing assembly 16 during draining of the fluid.

Referring now to FIG. 26, the food component within the upper containing assembly 14 can be added to the food component of the lower containing assembly 16. In one aspect of the present disclosure, the food component of the upper containing assembly 14 can be heated prior to mixing with the food component of the lower containing assembly 16. Alternatively, the heated food component of the lower containing assembly can heat the food component of the upper containing assembly upon its addition to the food component of the lower containing assembly.

The multi-component packaging system 10 may be composed of a highly durable and reusable material such as a plastic, rigid plastic, polymer, metal or metal alloy, styrofoam or like material, or may be composed of a disposable and easily biodegradable material, such as paper, or may be composed of any other material suitable for separably containing a variety of food components as described.

The components of the multi-component packaging system 10 may comprise a thermal insulating layer. For instance, the components may be composed of a thermoformable polystyrene or polyethylene material or optionally a thermoformable plastics material mix. The thermal insulating layer may comprise an organic thermoplastic fiber based material comprising polyester, polyethylene or polypropylene. In one example, the thermal insulating layer is a fiberfill batting comprising polyester. Alternatively, the thermal insulating layer may comprise melt blown fibers, such as melt blown polyolefins, sold as THINSULATE.RTM., by 3M.

Many other variations of insulating material for the thermal insulating layer can be used with the multi-component packaging system 10. For instance, the thermal insulating layer may comprise a foam, such as foamed polypropylene, or any other foam composition as known in the art that may be subjected to microwave heating. Or the thermal insulating layer may be made of an inorganic thermoplastic fiber based material comprising glass wool, borosilicate glass or rockwool. The packaging system components may be formed using standard molding techniques, including but not limited to injection molding, thermoforming, and blow molding.

Any of the components of the multi-component packaging system 10 may also comprise a first, or inner-most fabric layer, a second inner-most insulating layer which includes a polymeric foam, a third inner-most metallized polymer film reflective layer, and an outer-most fabric mesh layer. Also known in the film art is a thin electrical tape which comprises a polyester web-reinforced polyester film, as disclosed in 3M Utilities and Telecommunications OEM.

The thermal insulating layer may be laminated to multi-layer face materials. By "lamination" is meant uniting layers of material by an adhesive, by heating or other means. The face material may be film, paper and/or fabric. The film is made of a thermoplastic material comprising polyester, polyethylene or polypropylene. In one example, the thermal insulating layer is laminated between two sheets of face material of film, paper or fabric. However, it is within the scope of the present disclosure to laminate a single sheet of face material to the thermal insulating layer. The use of a single sheet of face material will not affect the thickness of the packaging material substantially, since the thickness of the face material is insignificant compared to the total thickness of the packaging material. The packaging material of the present disclosure may be thick enough, such as greater than 0.0075 inch (0.0190 cm.) thick, to provide adequate insulation for a package. Also, the packaging material may be thin enough to be flexible, and should be preferably less than 0.07 inch (0.1778 cm). It is contemplated however, that further additional examples of the containing assembly 12 may be substantially rigid and inflexible for application requiring a more durable containing assembly 12.

In an example suitable for microwave preparation, at least one of the components of the multi-component packaging system 10 may also comprise a microwave susceptible coating. Composite materials for use as microwave susceptors are also known. U.S. Pat. No. 5,021,293 shows a polyethylene terephthalate film coated with flakes of electrically conductive metal or metal alloy. U.S. Pat. No. 4,892,782 shows drapable liquid permeable woven or nonwoven fibrous dielectric substrates that are coated with susceptor materials which can be wrapped around food items for microwave heating. In one example, the microwave susceptible coating preferably is a metal or metal alloy, such as aluminum, stainless steel, nickel/iron/molybdenum alloys and nickel/iron/copper alloys. The coating is applied to an outer surface of first layer, preferably by vapor coating or alternatively by coating a solution of metal particles dispersed in a solvent over a surface of the layer. The coating could also be applied to second layer before joining layers together if layers are separate layers. For a metal or metal alloy as the susceptor, the preferred coating thickness may be from about 20 to 100 Angstroms, preferably from about 50 to 70 Angstroms. Alternatively, the coating thickness for a metallic microwave susceptible coating may be measured in optical density as measured with a Tobias TBX Densitometer, offered by Tobias Associates, Inc. of Glenside, Pa., USA, and preferably is in the range of from about 0.35 to 0.12. Further, a sealant may coat the microwave susceptible coating. The sealant comprises a layer of one or more polymers, such as a polyester copolymer, poly(vinylidene chloride), or a copolymer of ethylene with vinyl acetate.

Any or all components of the multi-component packaging system 10 and contents may require sterilization such as retorting to ensure bacterial elimination from the food products enclosed therein. Retorting may refer to any process of cooking food in the package it is sold in, such as meat or vegetables that need to cook at a particular temperature to kill off the micro-organisms and avoid botulism. The temperature is generally around 121 degrees Celsius. Retorting of the various sections may occur separately, to preserve the desired texture, flavor, appearance and other characteristics of the separate food components. The various components of the multi-component packaging system 10 and apparatus may then be assembled in the manners described, or in any manner suitable for assembling and packaging the food contents for sale and consumption.

The packaging material of the present disclosure can further include a coating on the face material. The coating is provided on the non-heat sealable surface of the face material. This coating is printable, so that the packaging material may also function as a label. The coating is a standard print primer based on aqueous polymer dispersions, emulsions or solutions of acrylic, urethane, polyester or other resins well known in the art. Alternatively, if the thermal insulating layer is previously printed, and the face material is clear, the need for coating the face material to make it printable may be eliminated.

The multi-component packaging system 10 may further comprise a receptacle for storing a utensil such as a fork, spoon, knife or any other utensil suitable for mixing or consuming meal components.

The methods disclosed may be implemented as sets of instructions, through a single production device, and/or through multiple production devices. Further, it is understood that the specific order or hierarchy of steps in the methods disclosed are examples of exemplary approaches. Based upon design preferences, it is understood that the specific order or hierarchy of steps in the method can be rearranged while remaining within the scope and spirit of the present disclosure.

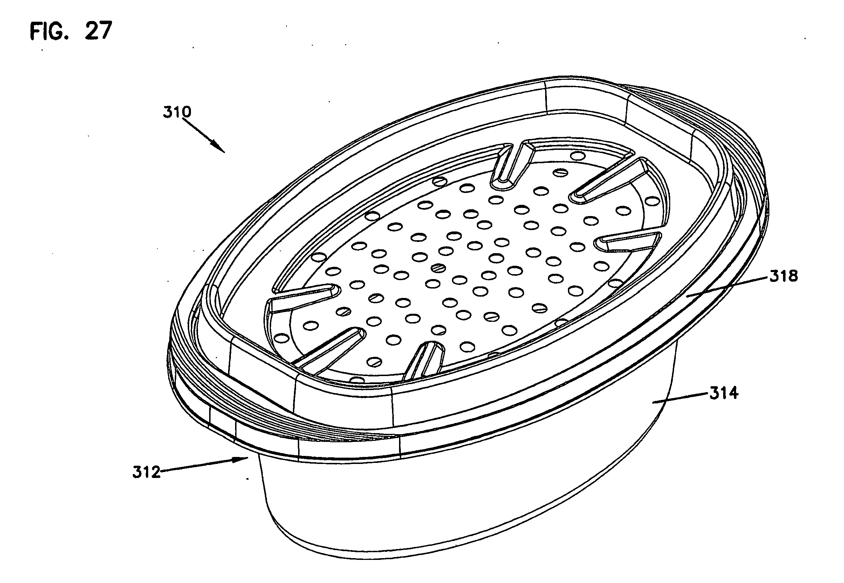

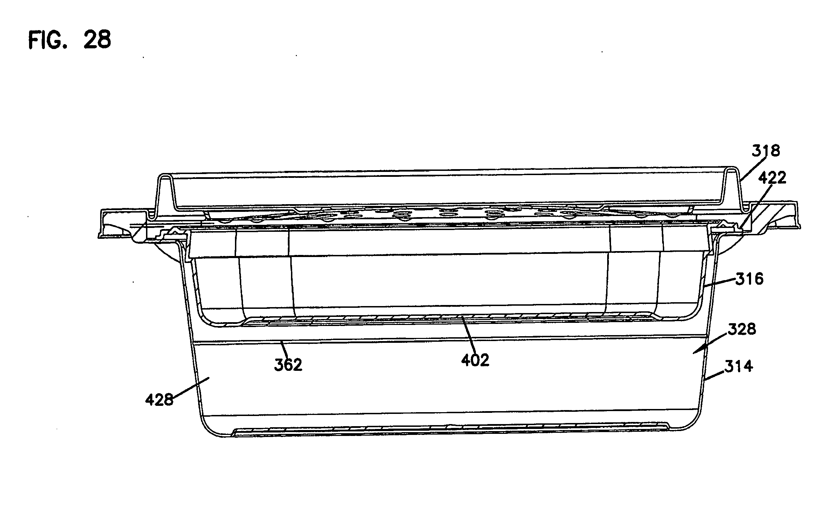

Referring now to FIGS. 27 and 28, an alternate example of a multi-component package system, generally designated 310 is shown. The multi-component package system 310 includes a container assembly 312. In one aspect of the present disclosure, the container assembly 312 includes a base container 314, a tray 316 (shown in FIG. 28) disposed in the base container 314, and a cover 318 engaged with the base container 314.

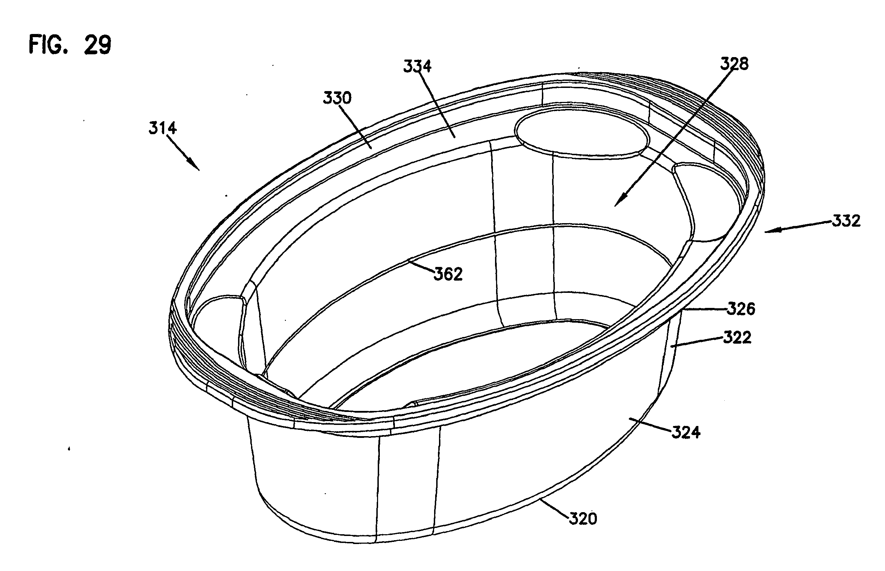

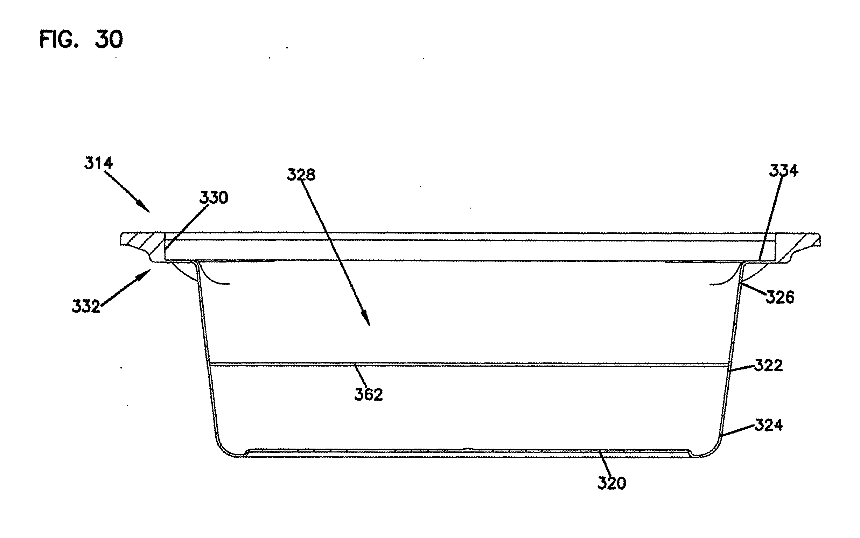

Referring now to FIGS. 29-31, the base container 314 is shown. The base container 314 includes a base wall 320 and a sidewall 322. The sidewall 322 includes a first end 324 and an oppositely disposed second end 326. The first end 324 is connectedly engaged with the base wall 320 such that the sidewall 322 extends outwardly from the base wall 320. In one aspect of the present disclosure, the base wall 320 and the sidewall 322 are continuous or monolithic.

The base wall 320 and the sidewall 322 cooperatively define an interior cavity 328. The interior cavity 328 of the base container 314 defines an interior volume. In one aspect of the present disclosure, the interior volume is in the range of about 8 oz. to about 32 oz. In another aspect of the present disclosure, the interior cavity 328 defines an interior volume less than or equal to about 32 oz., less than or equal to about 24 oz., less than or equal to about 20 oz., less than or equal to about 18 oz., less than or equal to about 16 oz., less than or equal to about 12 oz., or less than or equal to about 8 oz.

The sidewall 322 defines an opening 330 to the interior cavity 328 disposed at the second end 326 of the sidewall 322. In one aspect of the present disclosure, the opening 330 defines an area in the range of about 20 cm² to about 774 cm². In another aspect of the present disclosure, the opening 330 defines an area less than or equal to about 645 cm², less than or equal to about 322 cm², less than or equal to about 258 cm², less than or equal to about 192 cm², less than or equal to about 128 cm², less than or equal to about 64 cm², or less than or equal to about 32 cm².

A flange portion 332 is disposed at the second end 326 of the sidewall 322. The flange portion 332 of the sidewall 322 includes a lip 334. In one aspect of the present disclosure, the lip 334 extends around a portion of the interior cavity 328. In the depicted example of FIGS. 29-31, the lip 334 extends completely around the interior cavity 328 and includes portions that are generally planar in shape.

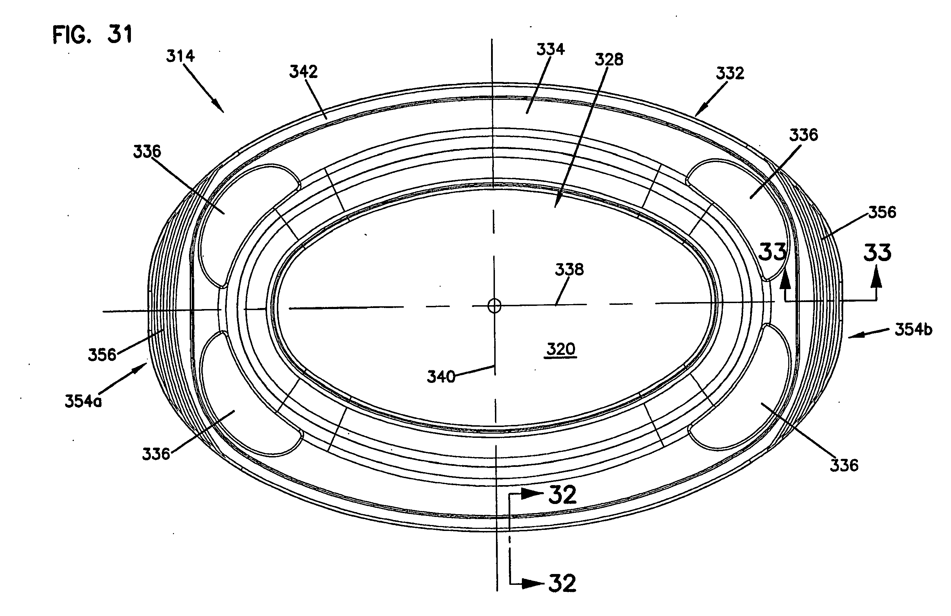

The lip 334 defines a plurality of recesses 336. In one aspect of the present disclosure, the lip 334 defines at least two recesses 336. In the depicted example of FIGS. 29-31, the lip 334 defines four recesses 336. Each recess 336 of the plurality of recesses 336 is a depression in the lip 334. The recesses 336 are axis-symmetric about the lip 334. In the depicted example, the recesses 336 are symmetric about a first center line 338 (shown in FIG. 31) and a second center line 340 (shown in FIG. 31) that is generally perpendicular to the first center line 338. In one aspect of the present disclosure, the recesses 336 include bottom surfaces that are generally slanted or angled toward the interior cavity 328 of the base container 314. This slanting or angling of the bottom surfaces of the recesses 336 allows food stuff such as cooking fluid or food product that is contained in the base container 314 during cooking to be directed toward the interior cavity 328 in the event the fluid or food product gets disposed in the recesses 336 before, during, or after cooking.

Referring now to FIGS. 31-33, the flange portion 332 of the sidewall 322 further defines a rim portion 342. The rim portion 342 includes a base end 344 and a free end 346. The base end 344 is connectedly engaged with the lip 334. The base end 344 defines an inner surface 348 that faces the interior cavity 328 of the base container 314. In the depicted example, the base end 344 extends outwardly from the lip 334 in a generally perpendicular direction.

The free end 346 of the rim portion 342 extends outwardly from the base end 344 and defines an upper surface 350. In the depicted example, the free end 346 extends outwardly from the base end 344 in a generally perpendicular direction. The free end 346 includes an edge 352 that will be described in greater detail subsequently.

Referring now to FIGS. 31, 33 and 34, the flange portion 332 further defines a first and second handle 354a, 354b laterally disposed about the rim portion 342. In one aspect of the present disclosure, the first and second handles 354a, 354b extend outwardly from the base end 344 of the rim portion 342. This positioning of the first and second handles 354a, 354b provide the consumer with a gripping location that is disposed away from the base container 314, which reduces the risk of the consumer being harmed by the heat of the food component in the interior cavity 328 after cooking.

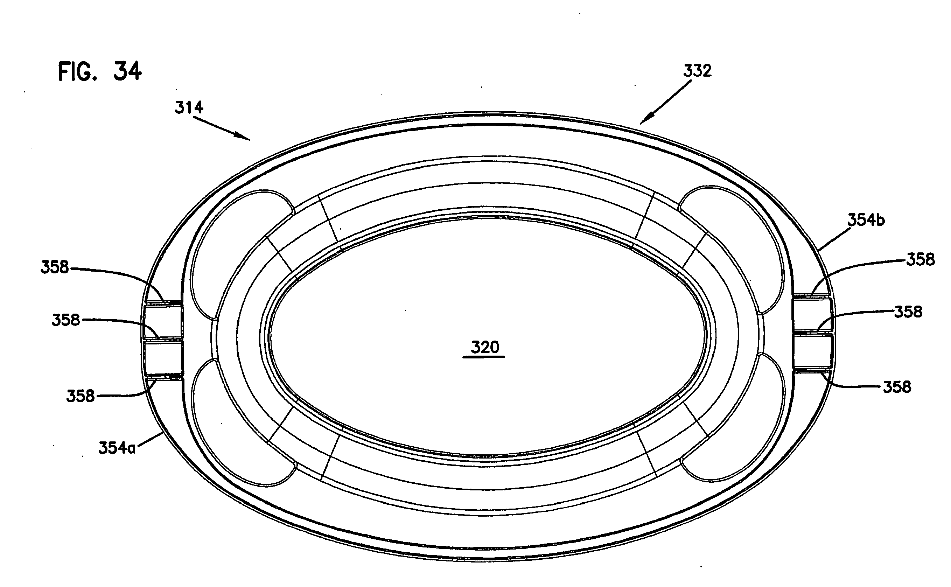

In another aspect of the present disclosure, each of the first and second handles 354a, 354b include a gripping surface 356 and a plurality of reinforcement members 358 (shown in FIG. 34). The gripping surface 356 is a textured surface that is adapted to reduce the risk of slipping after being grasped by a consumer. In the depicted example of FIG. 31, the gripping surface 356 includes a plurality of protrusions 360. Each of the plurality of protrusions 360 are equally spaced from adjacent protrusions 360.

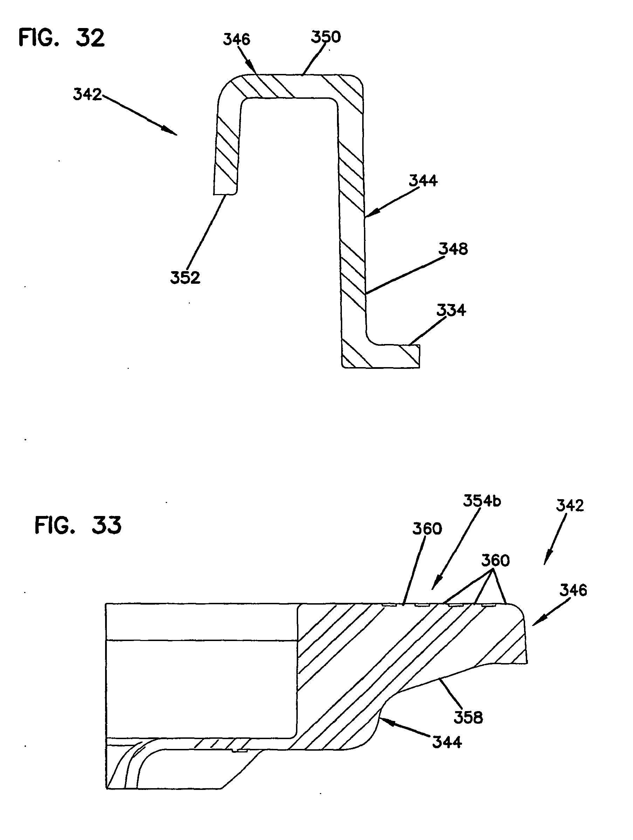

As best shown in FIG. 33, the reinforcement members 358 extend outwardly from the base end 344 of the rim portion 342 toward the free end 346. The reinforcement members 358 of the handles 354 provide stability to the base container 314 by minimizing the amount of deflection of the handles 358 when the base container 314 is picked up or moved by the handles 354. In addition, the reinforcement members 354 provide a surface against which a consumer can place a finger to pick-up or move the base container 314.

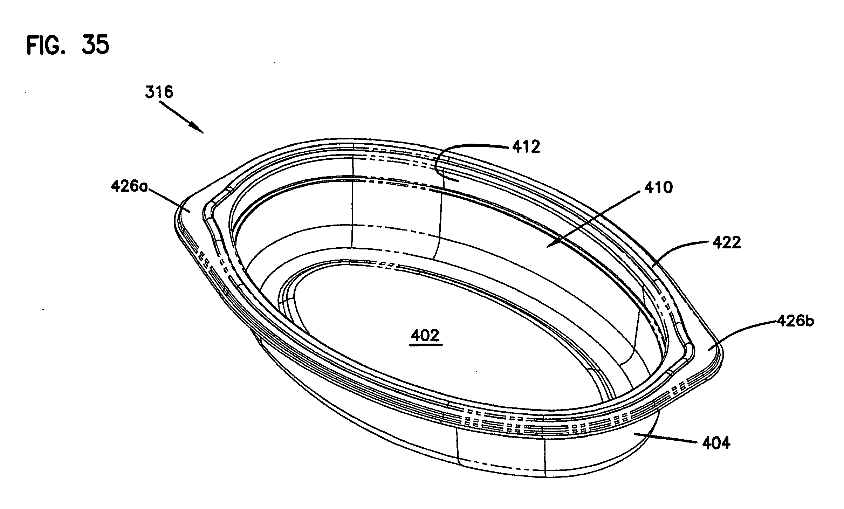

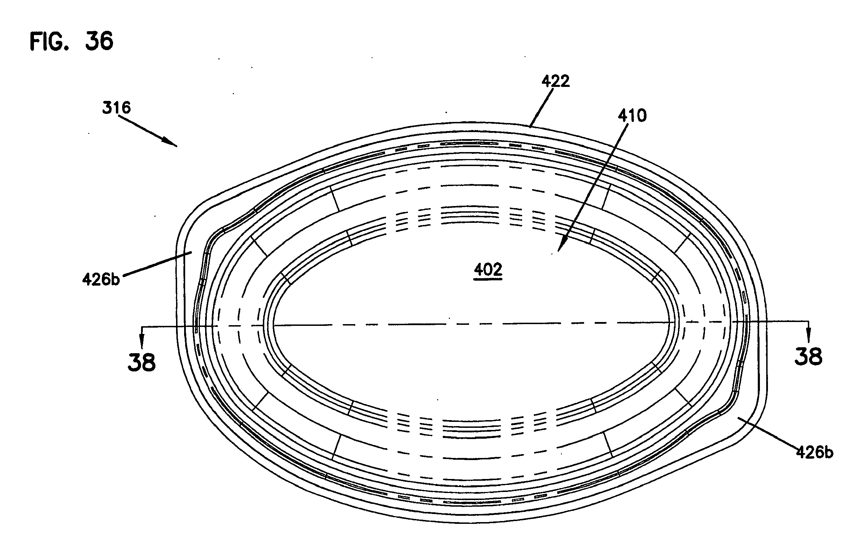

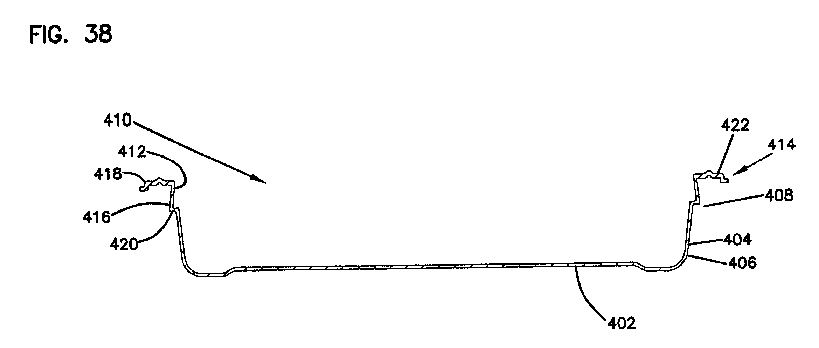

Referring now to FIGS. 35-38, the tray 316 is shown. In one aspect of the present disclosure, the tray 316 is sized to be received within the interior cavity 328 of the base container 314 through the opening 330 of the sidewall 322.

The tray 316 includes a base 402 and a side 404. The side 404 includes first end portion 406 and an oppositely disposed second end portion 408. The first end portion 406 is connectedly engaged with the base 402 such that the side 404 extends outwardly from an outer periphery of the base 402. In one example, the base 402 and the side 404 are continuous or monolithic.

The base 402 and the side 404 cooperatively define an interior 410. The side 404 defines a tray opening 412 to the interior 410 disposed at the second end portion 408 of the side 404.

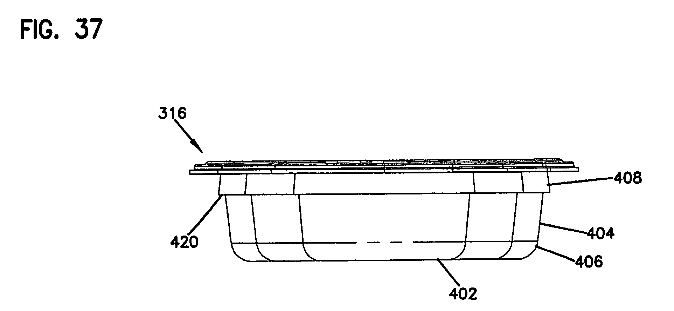

Referring now to FIGS. 37-38, the side 404 includes a flange 414 disposed at the second end portion 408 of the side 404. The flange 414 includes a first axial end portion 416 and an oppositely disposed second axial end portion 418. In the depicted example, the flange 414 is continuous or monolithic with the side 404.

The flange 414 includes a ridge 420 disposed at the first axial end portion 416. The ridge 420 extends outwardly from the side 404. In one aspect of the present disclosure, the ridge 420 extends around a portion of the interior 410. In the depicted example of FIGS. 35-39, the ridge 420 extends completely around the interior 410.

The flange 414 further includes a rim 422 disposed at the second axial end portion 418. The rim 422 extends outwardly from the side 404 and is adapted for engagement with the lip 334 of the base container 314.

Referring now to FIGS. 35 and 37, the rim 422 includes a first and second handle portion 426a, 426b in one aspect of the present disclosure. The first handle portion 426a is oppositely disposed about the rim 422 from the second handle portion 426b. The first and second handle portions 426a, 426b are sized such that a consumer can use a thumb and forefinger to grasp the first and second handle portions 426a, 426b to pick-up and/or move the tray 316. The first and second handle portions 426a, 426b are disposed outwardly from the side 404 such that the consumer can grasp the tray 316 at a location disposed away from the contents of the interior 410, which may be in a heated condition, thereby reducing the risk of injury to the consumer.

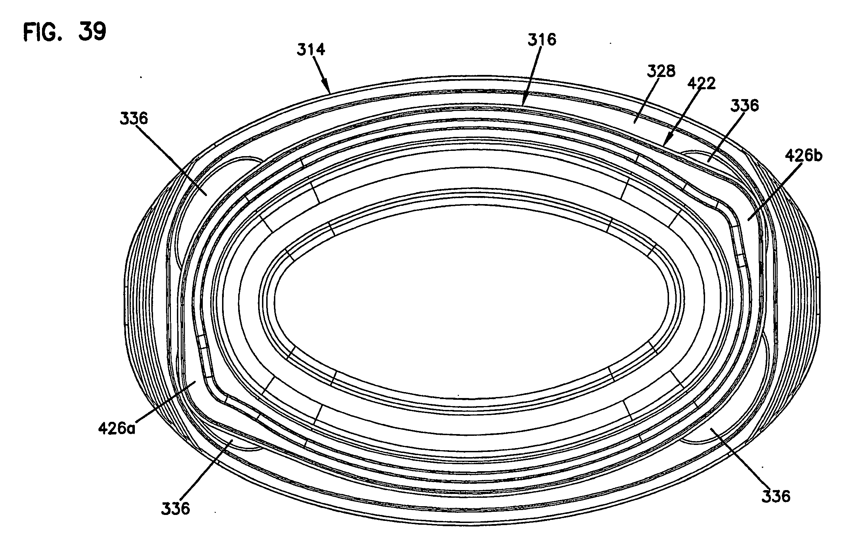

Referring now to FIGS. 28 and 39, the tray 316 is shown disposed in the interior cavity 328 of the base container 314. In one aspect of the present disclosure, the first and second handle portions 426a, 426b are disposed adjacent to the recesses 336 in the lip 334. The recesses 336 facilitate the selective removal of the tray 316 from the interior cavity 328 of the base container 314. The recesses 336 in the lip 334 of the base container 314 allow the consumer to insert a digit into the recess 336 and position that digit under the rim 422 of the tray 316. With digits positioned under the rim 422 of the tray 316, the tray 316 can be lifted from the base container 314 without spilling the contents of the tray 316.

As previously stated, the rim 422 is adapted for engagement with the lip 334 of the base container 314. As the tray 316 is lowered into the interior cavity 328 of the base container 314, a portion of the rim 422 abuts a portion of the lip 334. The engagement of the rim 422 and the lip 334 supports the tray 316 in the interior cavity 328 of the base container 314.

In one aspect of the present disclosure, the axial distance between the rim 422 and the base 402 of the tray 416 is less than the axial distance between the lip 334 and the base wall 320 of the base container 314. In this example, the base 402 of the tray 316 is axially displaced from the base wall 320 of the base container 314 when the rim 422 of the tray 316 is engaged with the lip 334 of the base container 314. The axial displacement of the base 402 of the tray 316 and the base wall 320 forms a gap 428 (shown in FIG. 28) between the base 402 and the base wall 320.

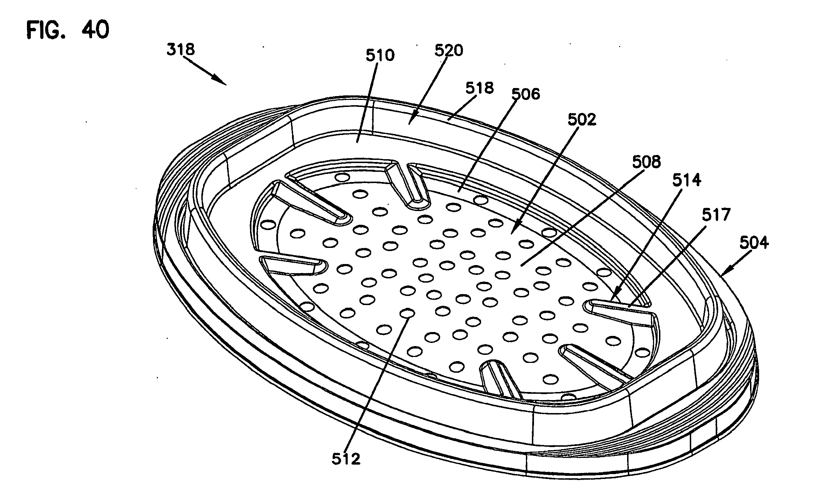

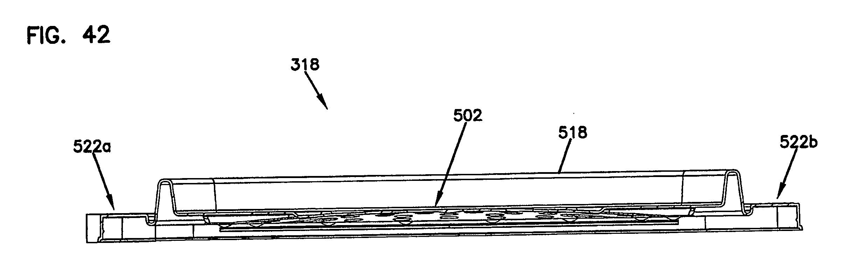

Referring now to FIGS. 40-43, the cover 318 is shown. The cover 318 includes a passage portion 502 and a brim portion 504. In one aspect of the present disclosure, the passage portion 502 is centrally disposed on the cover 318 and includes an outer portion 506 and a convex portion 508 disposed on a top surface 510 of the cover 318. The passage portion 502 defines a plurality of apertures 512 that extend through the cover 318. The plurality of apertures 512 is adapted to pass fluid during and/or after the food components within the base container 314 are heated. In one aspect of the present disclosure, the plurality of apertures 512 vents fluid vapor during heating. In another aspect of the present disclosure, the plurality of apertures 512 drains fluid after heating as the base container 314 is rotated toward an inverted position (see FIG. 25). In another aspect of the present disclosure, the plurality of apertures 512 strains the food components within the base container 314 as the base container 314 is in the inverted position. In this example, the plurality of apertures 512 is sized such that the food components within the interior cavity 328 of the base container 314 remain within the base container 314 during draining and/or straining.

In one aspect of the present disclosure, the plurality of apertures 512 define a total open area that is in the range of about 2.5% to 15% of an effective area of the cover 318, where the effective area of the cover 318 is the area of the cover 318 that is subjected to fluid (liquid, gas, vapor) that is within the base container during heating of the fluid or draining of the fluid. In another aspect of the present disclosure, the total open area is in the range of about 4% to about 8% of the effective area of the cover 318. In another aspect of the present disclosure, total open area is greater than about 2.5% of the effective area of the cover 318, greater than about 4% of the effective area of the cover 318, or greater than about 10% of the effective area of the cover 318.

In one aspect of the present disclosure, each of the plurality of apertures 512 is a hole having an inner diameter. By way of example only, the inner diameter of each of the plurality of apertures is in a range of about 1.5 mm to about 6.5 mm. In another aspect of the present disclosure, the number of apertures disposed on the cover 318 is at least 20, at least 25, at least 30, at least 45, at least 60, or at least 65.

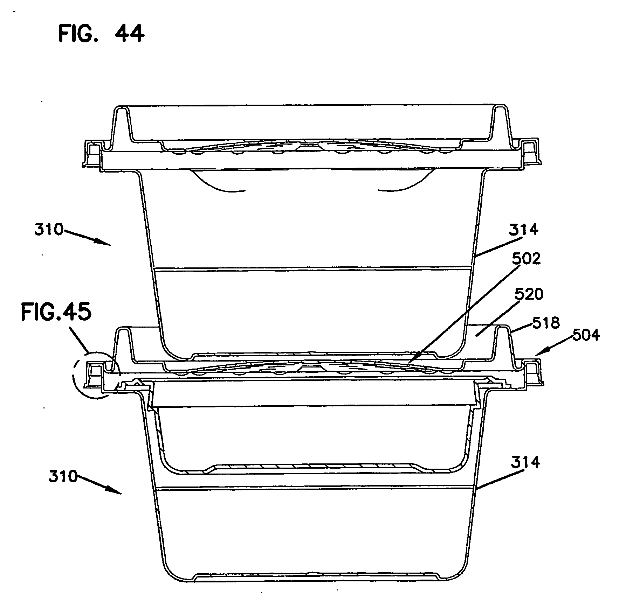

The passage portion 502 includes a plurality of ribs 514 that radiate partially inward from the outer portion 506 of the passage portion 502 toward the center of the convex portion 508. In one aspect of the present disclosure, there are six ribs 514 symmetrically disposed about a first center axis 515 and a second center axis 516 that is generally perpendicular to the first center axis 515. The ribs 514 include an upper surface 517 that is generally planar. The upper surface 517 of the ribs 514 provides an attachment site for a label or tamper-evident wrapping. The ribs 514 further provide increased stability of the convex portion 508. In addition, the upper surface 517 of the ribs 514 provide a surface on which another multiple component packaging system 310 can be stored (see FIG. 44).

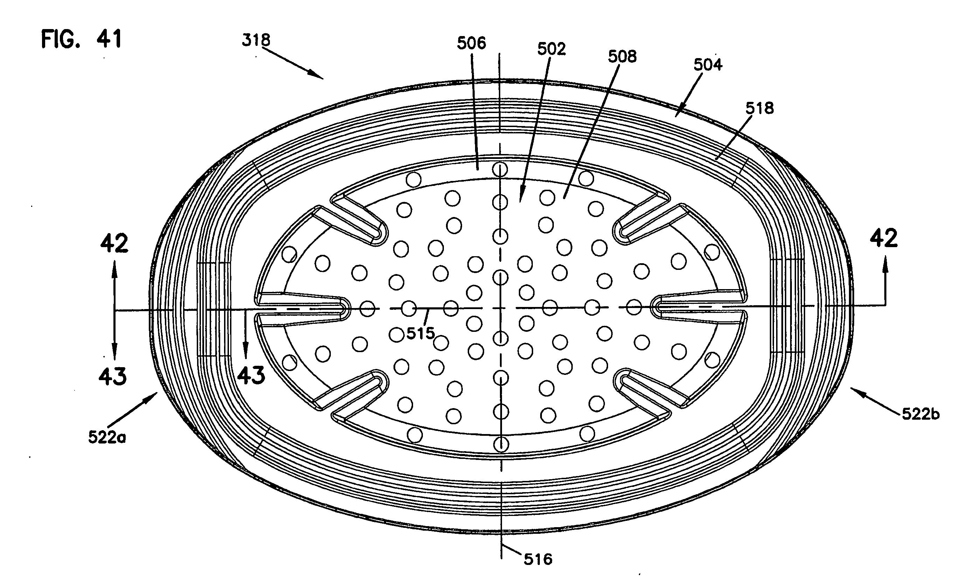

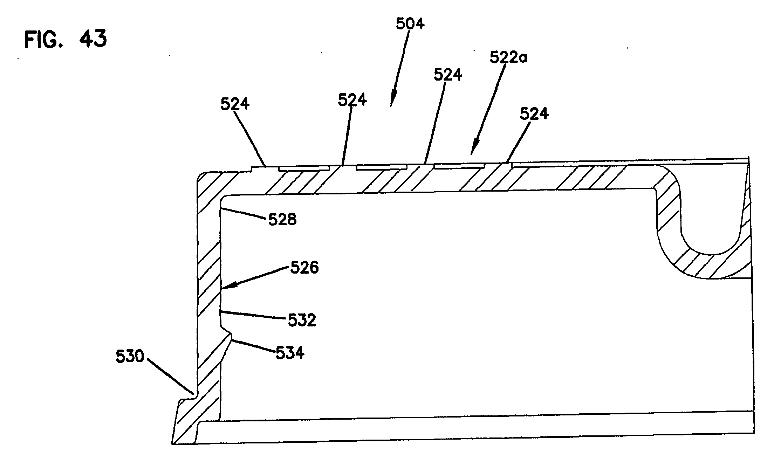

Referring now to FIGS. 41 and 43, the brim portion 504 is disposed about an outer periphery of the cover 318. The brim portion 504 includes a first gripping portion 522a and an oppositely disposed second gripping portion 522b. The first and second gripping portions 522a, 522b include a plurality of elevations 524 that corrugate each of the first and second gripping portions 522a, 522b. In the depicted example, each of the plurality of elevations 524 is equally spaced from each adjacent elevation 524. The elevations 524 assist the consumer in grasping the first and second gripping portions 522a, 522b by providing a reduced-slip surface.

Referring now to FIGS. 40 and 44, the cover 318 further includes a containment wall 518. The containment wall 518 is disposed between the passage portion 502 and the brim portion 504 of the cover 318. The containment wall 518 extends upwardly from the top of the cover 318 and is continuous around the cover 318. The containment wall 518 defines an inner cavity 520. The inner cavity 520 defines an inner volume. In one aspect of the present disclosure, the inner volume of the inner cavity 520 is less than or equal to about 50% of the volume of the interior cavity 328. In another aspect of the present disclosure, the inner volume is in the range of about 10% to about 40 % of the volume of the interior cavity 328. In another aspect of the present disclosure, the inner volume is in the range of about 12% to about 25 % of the volume of the interior cavity 328. In another aspect of the present disclosure, the inner volume is greater than or equal to about 2.5% of the volume of the interior cavity 328, greater than or equal to about 5% of the volume of the interior cavity 328, greater than or equal to about 10% of the volume of the interior cavity 328, greater than or equal to about 15% of the volume of the interior cavity 328, greater than or equal to about 20% of the volume of the interior cavity 328, greater than or equal to about 25% of the volume of the interior cavity 328, greater than or equal to about 30% of the volume of the interior cavity 328, or greater than or equal to about 35% of the volume of the interior cavity 328.

In one aspect of the present disclosure, the inner cavity 520 of the containment wall 518 is adapted to receive the base container 314 of another multiple component packaging system 310 when multiple component packaging systems 310 are disposed in a stacked configuration. While the base container 314 of the adjacent multiple component packaging system 310 is not firmly retained in the inner cavity 520, the containment wall 518 prevents excess lateral movement of the adjacent base container 314 which would otherwise result in the adjacent base container 314 falling off the cover 318 if the containment wall 518 was not present.

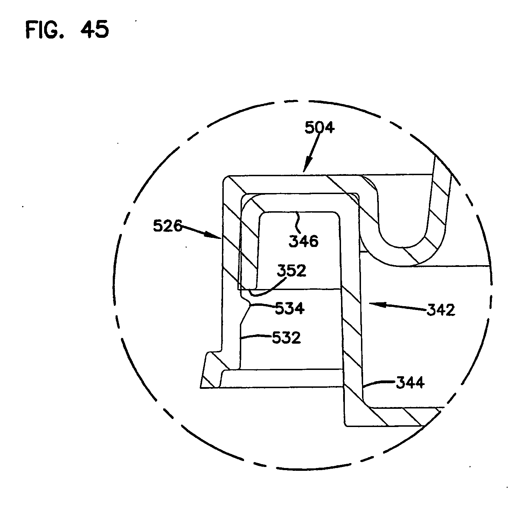

Referring now to FIGS. 43 and 45, the cover 318 further includes a collar 526 having a first end 528 and an oppositely disposed second end 530. The first end 528 of the collar 526 is connectedly engaged with the outer periphery of the brim portion 504 while the second end 530 of the collar 526 extends downwardly from a bottom surface of the brim portion 504. In one aspect of the present disclosure, the collar 526 is continuous or monolithic with the brim portion 504.

The collar 526 defines an inner surface 532 having a tab 534 protruding outwardly from the inner surface 532. The collar 526 is adapted to interlockingly engage the flange portion 332 of the base container 314. In one aspect of the present disclosure, the tab 534 is adapted to engage the edge 352 of the free end 344 of the rim portion 342 of the base container 314. The tab 534 is sized such that that the collar 526 flexes outwardly from the free end 346 of the rim portion 342 of the base container 314 as the cover 318 is initially engaged with the base container 314. When the tab 534 passes the edge 352 of the free end 345 of the base container 314, the collar 526 springs back. This springing back of the collar 526 after the tab 534 passes the edge 352 produces an audible clicking sound that alerts the consumer that the cover 318 is properly engaged with the base container 314.

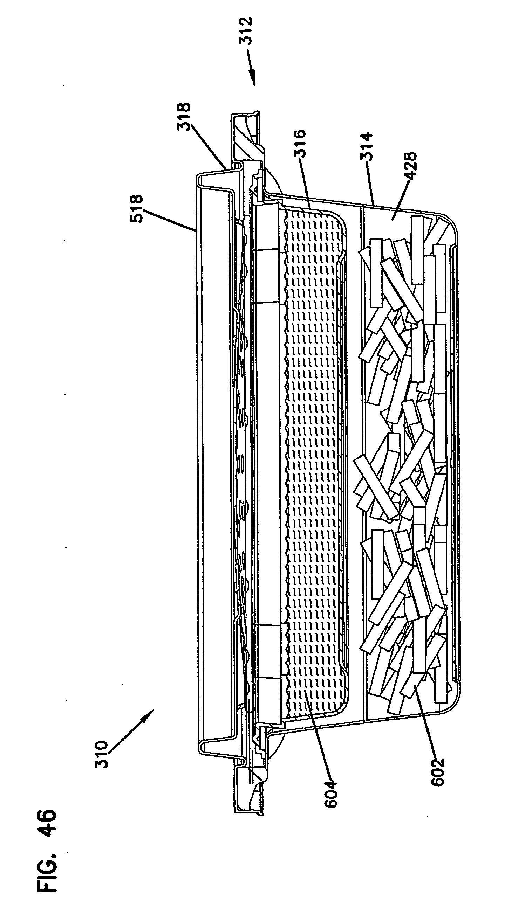

Referring now to FIG. 46, the multiple component packaging system 310 is shown with food components disposed in the container assembly 312. In one aspect of the present disclosure, a first food component 602 is disposed in the base container 314 and a second food component 604 is disposed in the tray 316. In another aspect of the present disclosure, the first food component 602 is disposed in the gap 428 of the multiple component packaging system 310.

It is within the scope of the present disclosure for the first and second food components to include food components that are stored in a shelf-stable state, a refrigerated state, or a frozen state. In one aspect of the present disclosure, the first and second food components 602, 604 are shelf-stable food components. In another aspect of the present disclosure, the first and second food components 602, 604 are partial ingredients to a meal. For example, the first food component 602 could be a primary food component (e.g., starch-based component, protein-based component, vegetable-based component, combinations thereof, etc.) while the second food component 604 is a seasoning component (e.g., sauce, herbs, etc.).

In another aspect of the present disclosure, the first food component 602 disposed in the interior cavity 328 of the base container 314 is a starch-based and/or protein-based food component (e.g., pasta, rice, beans, etc.) that is dehydrated or partially dehydrated. A fluid (e.g., water, broth, etc.) is added to the base container 314 and used to hydrate the at least partially dehydrated food component. In order to properly hydrate the food component, the fluid is heated during a cooking process so that the fluid boils.

When a fluid such as water is used to cook starch-based food components, foam develops on the top surface of the fluid during boiling as a result of starches and proteins in the starch-based food component. As the foam continues to develop, the foam can flow over (i.e., boil-over) the edge of a microwavable container thereby creating a spill on a bottom surface of the microwave. While sidewalls of the microwavable container can be increased such that the foam will not flow over the edge of the microwavable container during cooking, such a design makes the portion of the food component disposed in the microwavable container look small, which could negatively affect the consumers desire to purchase the product.

In one aspect of the present disclosure, the container assembly 312 includes features that reduce or eliminate the risk of boil-over during cooking. In one example, the container assembly 312 includes a fluid volume containment feature and a surface tension breakage feature.

In order to reduce or eliminate boil-over and preserve an appropriate proportion between the amount of the first food component 602 disposed in the interior cavity 328 and the interior volume of the interior cavity 328 of the base container 314, the container assembly 312 includes the fluid volume containment feature, which allows fluid to be restrained above and below the cover 318 from flowing over an edge of the container assembly 312. As the fluid in the container assembly 312 boils, the foam generated by the starches and proteins in the starch-based food component 602 fills the interior cavity 328 of the base container 314. The foam passes through the plurality of apertures 512 in the cover 318 and is retained on the cover 318 by the containment wall 518, thereby preventing foam from flowing over the edge of the container assembly 312.

By containing fluid above the cover 318 in the inner volume of the containment wall 518, the volume of the base container 314 can be made smaller, which improves the perception of the amount or portion of the first food component 602 in the base container 314. However, even with the volume of the base container 314 reduced, the effective volume (containment volume above and below the cover 318) of the container assembly 312 can still reduce or eliminate the risk of boil-over.

The surface tension breakage feature of the container assembly 312 also reduces or eliminates the risk of boil-over. The residual starches in the starch-based food component increase the surface tension of the water in the base container 314. As a result of this increased surface tension, bubbles from the boiling water begin to accumulate and rise. The surface tension breakage feature disrupts the formation of bubbles. In one example, the surface tension breakage feature is a textured surface (e.g., ridges, bumps, etc.) that breaks the bubbles of the foam on contact. In one aspect of the present disclosure, the cover 318 includes the surface tension breakage feature on an interior surface 536 that faces the interior cavity 328 of the base container 314 when the cover 318 is disposed on the base container 314. In another aspect of the present disclosure, the cover 318 includes the surface tension breakage feature on the outer surface 510.

In one aspect of the present disclosure, the container assembly 312 includes an anti-foam composition of the present disclosure or a chemical agent that affects the formation of foam during the cooking process. In one aspect of the present disclosure, the anti-foam composition of the present disclosure or the chemical agent is applied to the first food component 602. In another aspect of the present disclosure, the anti-foam composition of the present disclosure or the chemical agent is disposed on inner surfaces of the sidewalls 322 that face the interior cavity 328 of the base container 314. In another aspect of the present disclosure, the chemical agent is an ingredient of the first food component 602.

The chemical agent can be any one or combination of the following: oil (e.g., vegetable oil, nut oil, etc.); lecithin and lecithin modifications and derivatives; monoglycerides (e.g., acetylated monoglyceride, etc.), diglycerides, and triglycerides of various Fatty Acid sources, lengths, modifications (e.g., enzymatic, chemical, etc.) and derivatives (e.g., glycerin, etc.); and chemical or synthetic surfactants (e.g., silicon based antifoaming agents, etc.). It will be understood, however, that the scope of the present disclosure is not limited to the chemical agent being one of the above list.

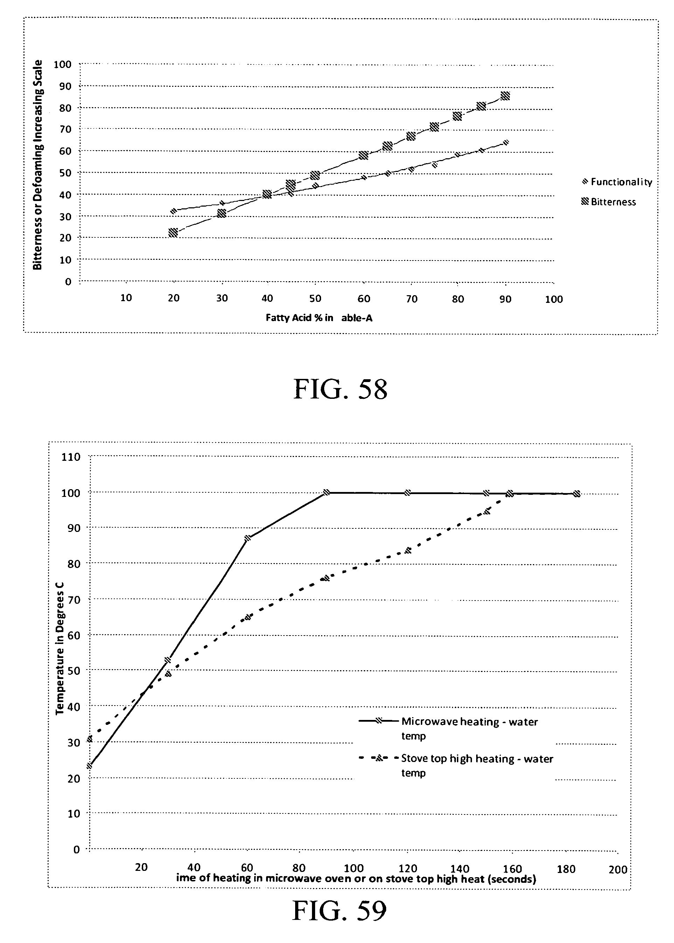

As shown in FIG. 59, the rate of temperature rise of water heated in a 1100 watt microwave oven at its highest heat setting is much greater than the rate of temperature rise of water heated on a conventional stove top at its highest heat setting. The rapid heat transfer and faster temperature rise of water heated in a microwave oven results in faster foam rise when pasta, rice, beans, or grains are cooked in a microwave oven compared to the conventional stove top. Thus anti-foam agents for use in microwave cooking applications that employ limited height containers must have a fast reaction rate to prevent boil-over of foam.

As discussed in the Examples, chemical agents known to have anti-foam/defoaming properties, such as dimethylsilioxane (silicone oil), silicone dioxide in oil with or without mono-diglycerides, acetylated monoglyceride (AMG), and polyglyceryl-10, were tested in a container assembly of the present disclosure and were surprisingly and expectedly found to be inefficient at preventing the boil-over of foam during the microwave cooking process. The anti-foam compositions of the present disclosure exhibit enhanced foam suppression and foam breaking activity compared to the conventional anti-foam agents and prevent boil-over in container assemblies of the present disclosure during the microwave cooking process. The anti-foam compositions of the present disclosure capture the rise of foam within 0 to about 30 seconds and keep the foam under the cover 318 thereby preventing boil-over. In one example, the anti-foam compositions capture the rise of foam within 0 to about 15 seconds. The anti-foam compositions of the present disclosure allow for the use of a cover 318 having a containment wall 518 of reduced height or a cover 318 that does not include a containment wall 518, which reduces the cost of manufacturing the container assemblies of the present disclosure.

The amount of an anti-foam composition of the present disclosure to prevent foam boil-over in a container assembly of the present disclosure is dependent upon the ratio of fluid to first food component 602. The amount of fluid to be added to the base container 314 is proportional to the amount of the first food component 602 in the interior cavity 328 of the base container 314. When the ratio of the amount of fluid added to the amount of first food component 602 in the base container 314 is in the range of about 2:1 to about 6:1, the amount of an anti-foam composition of the present disclosure to prevent boil-over in the container assembly is generally about 1% or less of the dry weight of the first food component 602. In an example, the amount of anti-foam composition of the present disclosure is about 0.2 % to about 1%. In another example, the amount of anti-foam composition of the present disclosure is about 0.25% to about 1%, about 0.3% to about 1%, about 0.4% to about 1%, about 0.5% to about 1%, about 0.6% to about 1%, about 0.7% to about 1%, about 0.8% to about 1%, or about 0.9% to about 1% of the dry weight of the first food component 602. Unlike conventional anti-foam agents, such as dimethylsilioxane and silicone dioxide based anti-foam agents, the anti-foam compositions of the present disclosure do not form a film or a leave a residue (typically a white residue) on the first food component 602 or the interior surfaces of the container assemblies of the present disclosure after cooking or impart a gummy or gritty texture to the first food component 602 after cooking.

In one aspect of the present disclosure, the anti-foam composition comprises about 20% to about 90% fatty acid by weight, about 5% to about 30% mono-diglyceride by weight, and about 5% to about 50% acetylated monoglyceride (AMG) by weight. In one example, the anti-foam composition comprises about 30% to about 80% fatty acid by weight, about 8% to about 30% mono-diglyceride by weight, and about 10% to about 40% acetylated monoglyceride (AMG) by weight. In one example, the anti-foam composition comprises about 40% to about 50% fatty acid by weight, about 15% to about 20% mono-diglyceride by weight, and about 30% to about 40% AMG by weight. In one example, the anti-foam composition comprises about 45% fatty acid by weight, about 20% mono-diglyceride by weight, and about 35% AMG by weight. In one example, the anti-foam composition comprises about 45% fatty acid by weight, about 25% mono-diglyceride by weight, and about 30% AMG by weight. In one example, the anti-foam composition comprises about 40% fatty acid by weight, about 20% mono-diglyceride by weight, and about 40% AMG by weight. In one example, the anti-foam composition comprises about 50% fatty acid by weight, about 20% mono-diglyceride by weight, and about 30% AMG by weight. In one example, the anti-foam composition comprises about 30% fatty acid by weight, about 20% mono-diglyceride by weight, and about 50% AMG by weight.

In another aspect, the anti-foam composition of the present disclosure comprises about 10% to about 40% AMG by weight, about 40% to about 70% fatty acid by weight, and about 5% to about 10% precipitated hydrophobised silica by weight. In one example, the anti-foam composition of the present disclosure comprises about 20% to about 30% AMG by weight, about 40% to about 60% fatty acid by weight, and about 5% to about 10% precipitated hydrophobised silica by weight. In one example, the anti-foam composition of the present disclosure comprises about 10% to about 15% AMG by weight, about 50% to about 70% fatty acid by weight, and about 6% to about 10% precipitated hydrophobised silica by weight. In another example, the anti-foam composition comprises about 32% AMG by weight, about 60% fatty acid by weight, and about 8% precipitated hydrophobised silica by weight.

In yet another aspect, the anti-foam composition of the present disclosure comprises about 2% to about 12% precipitated hydrophobised silica by weight, about 70% to about 90% vegetable oil by weight, about 0% to about 12% mono-diglyceride by weight, and about 0% to about 10% of an emulsifier by weight. In one example, the anti-foam composition of the present disclosure comprises about 5% to about 12% precipitated hydrophobised silica by weight, about 70% to about 90% vegetable oil by weight, about 4% to about 12% mono-diglyceride by weight, and about 1% to about 10% of an emulsifier by weight. In one example, the anti-foam composition of the present disclosure comprises about 5% to about 12% precipitated hydrophobised silica by weight, about 80% to about 90% vegetable oil by weight, about 4% to about 12% mono-diglyceride by weight, and about 1% to about 5% of an emulsifier by weight. In another example, the anti-foam composition of the present disclosure comprises about 5% to about 11% precipitated hydrophobised silica by weight, about 70% to about 80% vegetable oil by weight, about 5% to about 10% mono-diglyceride by weight, and about 5% to about 10% of an emulsifier by weight. In another example, the anti-foam composition of the present disclosure comprises about 2% to about 8% precipitated hydrophobised silica by weight, and about 92% to about 98% vegetable oil by weight. In yet another example, the anti-foam composition of the present disclosure comprises about 2% to about 8% precipitated hydrophobised silica by weight, and about 95% to about 98% vegetable oil by weight. The anti-foam compositions can be emulsified to form an emulsion. The emulsion can be a micro-emulsion or a nano-emulsion. In an example, the average diameter of the droplets comprising the emulsion is about 1 micron to about 20 microns.

Examples of vegetable oil include, but are not limited to, soybean oil, rapeseed oil, corn oil, sunflower oil, palm oil, canola oil, olive oil, modified canola oil, high stability canola oil, high stability soybean oil, safflower oil, coconut oil, cottonseed oil, peanut oil, palm oil, nut oils, or a combination thereof. In an example, the vegetable oil comprises canola oil. Examples of suitable emulsifiers include but are not limited to propylene glycol, polyglycerol, polysorbate, and the like. In one example, the precipitated hydrophobised silica in the anti-foam composition of the present invention comprises an average particle size of about 5 microns to about 10 microns.

Fatty acids have a significantly more bitter taste than AMG and when used an anti-foaming agent in food products may impart a bitter flavor note to the food product. The amount of fatty acid in the anti-foam compositions of the present disclosure can be adjusted as desired based on, for example, the flavor notes of the particular food components in the meal to reduce bitter flavor notes of the anti-foam composition while maximizing anti-foam and foam breaking activity. In one example, the anti-foam composition has a bitterness score (fatty acid to AMG) of 50 or less, preferably 45 or less. Fatty acids in the anti-foam compositions of the present disclosure can be long chain fatty acids, medium chain fatty acids, short chain fatty acids, or a combination thereof. The fatty acids can be saturated fatty acids, unsaturated fatty acids including polyunsaturated fatty acids, or a combination thereof. Examples suitable for use in food products include but are not limited to caproic acid, caprylic acid, capric acid, lauric acid, myristic acid, palmitic acid, stearic acid, palmitoleic acid, oleic acid, linoleic acid, linolenic acid, arachidonic acid, eicosapentaenoic acid (EPA), docosahexaenoic acid (DHA), erucic acid, myristoleic acid, and the like. In one example, the fatty acid comprises oleic acid. In another example, the fatty acid comprises a mixture of oleic acid and palmitoleic acid. Preferably the fatty acids have a melting point below room temperature (20-25°C).

Unlike conventional anti-foam agents which are typically intimately mixed with the food component, the anti-foam compositions of the present disclosure do not have to be intimately mixed with the food component to have effective anti-foam and foam breaking activity during microwave cooking of the food component. Foam collapses upon contact with the anti-foam compositions of the present disclosure. Therefore, the anti-foam compositions can be applied to one or more interior surfaces of the container assemblies of the present disclosure as desired for fast reaction. For example, the anti-foam compositions of the present disclosure can be disposed on inner surfaces of the sidewalls 322 that face the interior cavity 328 of the base container 314, inner surfaces of the base wall 320 that face the interior cavity 328 of the base container 314, inner surfaces of the cover 318 that face the interior cavity 328 of the base container 314, or a combination of said inner surfaces. Preferably the anti-foam composition is in a liquid form and sprayable for application to the interior surfaces of the container assemblies of the present disclosure. The anti-foam compositions of the present disclosure are also suitable for application to the first food component 602.

In one aspect of the present disclosure, the base container 314 includes indicium 362 (shown in FIGS. 28-30) indicating the amount of fluid to add to the base container 314 prior to cooking. In one example, indicium 362 is disposed on sidewall 322 such that the vertical distance between indicium 362 and the free end 346 of the rim portion 342 of sidewall 322 is at least 1 cm. In another example, the vertical distance between indicium 362 and the free end 346 of the rim portion 342 of sidewall 322 is about 1 cm to about 5 cm, about 1 cm to about 4 cm, about 1 cm to about 3 cm, about 1 cm to about 2 cm, or about 1 cm to about 1.5 cm.

In one example, the amount of fluid to be added to the base container 314 is proportional to the amount of the first food component 602 in the interior cavity 328 of the base container 314. In one example, the ratio of the amount of fluid added to the amount of first food component 602 in the base container 314 is in the range of about 2:1 to about 6:1. In one example, the ratio of the amount of fluid added to the amount of first food component 602 in the base container 314 is about 2.5 to about 3.5:1, about 3:1 to about 3.5:1, about 2.9:1 to about 3.3:1, or about 2.75:1 to about 3:1. In one example, the ratio of the amount of fluid added to the amount of first food component 602 in the base container 314 is about 2.9:1 or about 3.27:1. In one example, the amount of fluid added to base container 314 is the same regardless of the type (e.g., rice, pasta, beans, etc.) of the at least partially dehydrated first food component 602 disposed in the interior cavity 328 of the base container 314.

In another example, in order to reduce or eliminate the risk of boil-over, the volume taken up by the amount of fluid and the amount of first food component 602 in the interior cavity 328 is less than or equal to about 60% of the total volume of the interior cavity 328 of the base container 314.

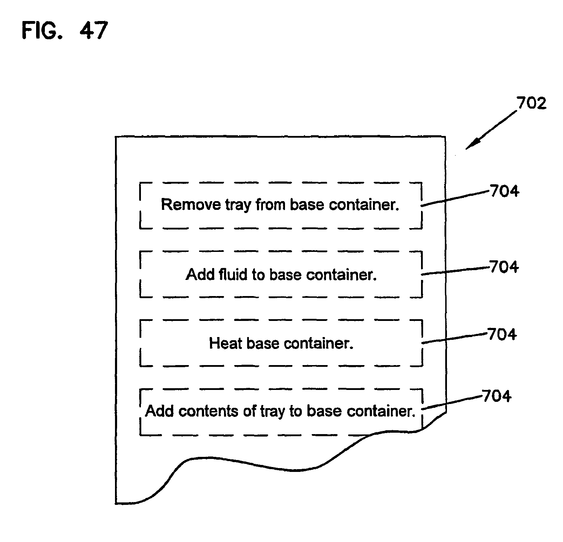

Referring now to FIGS. 46 and 47, in one aspect of the present disclosure, the multiple component packaging system 310 includes a set of instructions 702. The set of instructions 702 may be disposed on a label affixed to the base container 314, the cover 318, or the exterior packaging 200.

The set of instructions 702 include a plurality of steps 704 that instruct the consumer on how to prepare the first and second food components 602, 604. In one aspect of the present disclosure, the set of instructions 702 can include text, graphics, symbols, colors, etc.

In the example depicted in FIG. 47, the set of instructions 702 instruct the consumer to lift the tray 316 from the base container 314 and to add fluid (e.g., water, broth, etc.) to the base container 314. The set of instructions 702 then instruct the consumer to heat the contents of the base container 314 and to add the contents of the tray 316 to the base container 314.

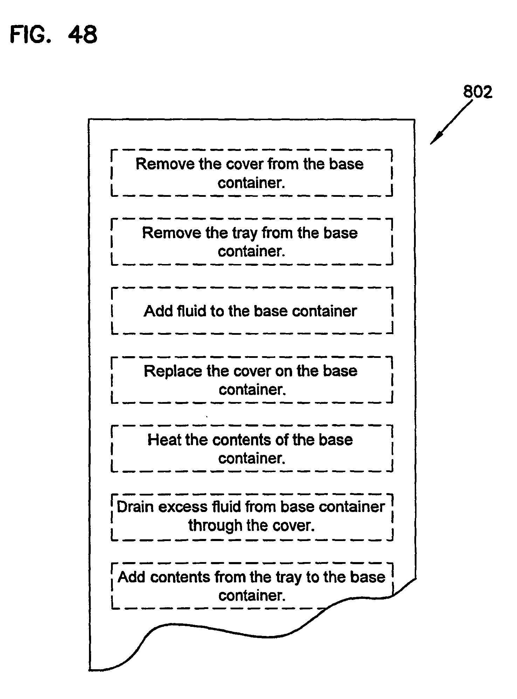

Referring now to FIG. 48, an alternate example of a set of instructions 802 suitable for use on the multiple component packaging system 310 is shown. In the depicted example, the set of instructions 802 instruct the consumer to remove the cover 318 from the base container 314 and lift the tray 316 from the base container 314. The set of instructions 802 then provide that fluid should be added to the base container 314 and the cover 318 reengaged to the base container 314. The set of instructions further instruct the consumer to heat the contents of the base container 314 and then drain the excess fluid through the plurality of apertures 512 in the cover 318. As the cover 318 includes the plurality of apertures 512, it will be understood that the cover 318 can be reengaged with the base container 314 at any point following removal of the tray 316 and prior to draining of the excess fluid through the cover 318. The set of instructions further instruct adding the contents of the tray 316 to the base container 314.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

As used in this specification and the appended claims, the singular forms "a," "an," and "the" include plural referents unless the content clearly dictates otherwise. Thus, for example, reference to a composition containing "a fatty acid" includes a mixture of two or more fatty acids. It should also be noted that the term "or" is generally employed in its sense including "and/or" unless the content clearly dictates otherwise. It also is specifically understood that any numerical value recited herein includes all values from the lower value to the upper value, i.e., all possible combinations of numerical values between the lowest value and the highest value enumerated are to be considered to be expressly stated in this application.

### EXAMPLES

The following examples are provided to assist in a further understanding of the container assemblies and anti-foam compositions described herein. The particular materials and conditions employed are intended to be illustrative and not limiting on the scope of the appended claims.

### Example 1

When starch-based food components such as pasta, rice, beans, or grains are cooked in a fluid such as water, foam develops on the top surface of the water during boiling as a result of starches and proteins in the starch-based food component. Microwave ready packaged meals are generally heated in a microwave having at least 1000 watts which results in a fast heating rate of starch-based food components, generally about 3 minutes for pasta and about 5 minutes for rice to cook to a consumer desirable al dente texture, compared to the heating rate of a conventional stove top. Under these heating conditions, foam rises very quickly in the confined space of the microwave container. While sidewalls of the microwavable container can be increased such that the foam will not flow over the edge of the microwavable container during cooking, such a design makes the portion of the food component disposed in the microwavable container look small, which could negatively affect the consumers desire to purchase the product.

Chemical anti-foam/defoaming agents can be used to reduce boil-over and preserve an appropriate proportion between the food component 602 disposed in the interior cavity 328 and the interior volume of the interior cavity 328 of the base container 314. It is important that the anti-foam agent delay and/or break foam formation but not delay boiling or lengthen the cooking time. Conventional anti-foam agents, such as dimethylsilioxane and silicone dioxide, were tested and found to exhibit anti-foaming properties not suitable for use in base container 314. Compositions having the desired anti-foaming and foam breaking activities for use in base container 314 were developed.

A known amount of rotini pasta was placed in a graduated beaker with a volume scale with or without an amount of anti-foam. Prior to the addition of water, and amount of anti-foaming agent was distributed on the surface of the pasta. Conventional anti-foam agents and experimental anti-foam compositions were tested and are shown in Table 1. The water was brought to a quick boil by placing the beaker on a hot surface. The time to formation of a foam layer and the foam explosion time, when the foam suddenly and enormously expands, were observed. The results are shown in Table 2.

**Table 1**

| **Conventional Anti-Foaming Agents** | |
|---|---|
| Dimethylsilioxane (silicone oil) | |
| Silicon Dioxide in Oil | 98% canola oil; |
| | 2% hydrophobic silica |
| Acetylated Mono Glyceride (AMG) | |
| Polyglyceryl-10 Decaoleate | |
| **Experimental Anti-Foaming Agent** | |
| Exp 1 | 45% fatty acid; |
| | 30% acetylated monoglyceride; |
| | 25% mono-diglyceride |

**Table 2**

| | **Pasta (g)** | **Water (g)** | **Starting water temp (°F)** | **Anti-Foam (g)** | **Foam layer formation (sec)** | **Foam explosion time (sec)** |
|---|---|---|---|---|---|---|
| Control-no anti-foam | 10.12 | 40.2 | 69 | 0 | 67 | 4 |
| Dimethylsilioxane | 10.4 | 40.2 | 69 | 0.08 | 20 | 4 |
| Silicon Dioxide in Oil | 10.0 | 40.2 | 69 | 0.07 | 60 | 4 |
| AMG | 10.07 | 40.15 | 69 | 0.07 | 120 | 10 |
| Polyglyceryl-10 Decaoleate | 10.02 | 40.2 | 69 | 0.14 | 40 | 4 |
| Exp 1 | 10.07 | 40.15 | 69 | 0.07 | 120 | 10 |

As shown in Table 2, dimethylsilioxane, silicone dioxide, and polyglyceryl-10 decaoleate were much less effective compared to AMG and Exp1 in suppressing foam formation and foam explosion. AMG and Exp 1 were 2-6 times more effective than dimethylsilioxane, silicon dioxide, and polyglyceryl-10 decaoleate in delaying foam formation and foam explosion.

Figure 49 shows a plot of foam volume (cm³) versus time for the control - no anti-foam; figure 50 shows a plot of foam volume versus time for dimethylsilioxane; figure 51 shows a plot of foam volume versus time for silicon dioxide in canola oil; figure 52 shows a plot of foam volume versus time for AMG; figure 53 shows a plot of foam volume versus time for polyglyceryl-10 decaoleate; and figure 54 shows a plot of foam volume versus time for Exp1. Pasta with no anti-foam formed 750 cm³ of foam after only 60 seconds of heating (Fig. 49). Pasta treated with dimethylsilioxane formed 550 cm³ of foam after 60 seconds of heating (Fig. 50). Pasta treated with silicon dioxide formed 550 cm³ of foam after 60 seconds of heating (Fig. 51). The amount of foam began to decrease after 75 seconds of heating (Fig. 51). After 180 seconds of heating, pasta with silicon dioxide had 350 cm³ of foam (Fig. 51). Pasta treated with AMG formed 100 cm³ of foam after 14 seconds of heating (Fig. 52). The amount of foam began to decrease after 109 seconds of heating (Fig. 52). After 250 seconds of heating, the pasta with AMG only had 50 cm³ of foam (Fig. 52). Pasta treated with polyglyceryl-10 decaoleate formed 100 cm³ of foam after 30 seconds of heating and maintained 100 cm³ of foam throughout the heating (Fig. 53). Pasta treated with Exp1 formed 50 cm³ of foam after 14 seconds of heating (Fig. 54). The amount of foam began to decrease after 131 seconds of heating (Fig. 54). No foam was present after 181 seconds of heating, 200 seconds of heating, and 240 seconds of heating (Fig. 54).

As shown in figures 49-54, Exp1 significantly reduced the maximum amount of foam (50 cm³ respectively compared to 750 cm³ (control), 550 cm³ (dimethylsilioxane and silicon dioxide), and 100 cm³ (AMG and polyglyceryl-10 decaoleate)) and exhibited enhanced foam breaking activity compared to the conventional anti-foaming agents. In the pasta treated with Exp1, no foam was present after 181 seconds of heating, 200 seconds of heating, and 240 seconds of heating. In contrast, all of the conventional anti-foam agents that were tested had a significant volume of foam (50 cm³ or more) after 181 seconds of heating, 200 seconds of heating, and 240 seconds of heating.

### Example 2

The anti-foaming activity of Exp 1 and conventional anti-foam agents was tested in a container assembly 312 that included a base container 314 and cover 318 engaged with the base container 314. The base container had an interior volume of approximately 475 cm³, an interior surface area of approximately 230 cm², and sidewall 322 height of approximately 6 cm, measured from the free end 346 of the rim portion 342 of the sidewall 322 to the base wall 320. An indicium 362 indicating the amount of water to add to base container 314 before cooking was disposed on the sidewall 322 between the base wall 320 and free end 346 of the rim portion 342 of the sidewall 322 approximately 2.5 cm from the base wall 320. Fifty-five grams of rotini paste was placed in base container 314. 0.35 grams of the anti-foam composition was distributed on the pasta surface. One hundred eighty grams of water was added to the pasta such that the surface of the water was approximately even with the indicium 362. The cover 318 was engaged with the base container 314 and the entire meal was placed in an 1100 watt microwave oven and cooked for 3.5 minutes. The time to formation of a foam layer and any amount of foam projecting through the apertures 512 of the cover 318 were observed. Results are shown in Table 3.

**Table 3**

| **Anti-Foam** | **Foam layer formation (min)** | **Foam explosion time (sec)** | **Foam thru apertures in cover** | **Figure** |
|---|---|---|---|---|
| Control - no anti-foam | 1.2 | 3 | Vigorous | 55 |
| Dimethylsilioxane | 2.0 | 2.5 | Vigorous | |
| Silicone dioxide | 2 | 3 | Vigorous | |
| AMG | 2.0 | 10 | Medium boil over | 56 |
| Polyglyceryl-10 Decaoleate | 2 | 2 | Medium boil over | |
| Canola oil/silicon dioxide/ mono-diglycerides | 2 | 2 | Light boil over | |
| Exp1 | 2.1 | No explosion | No foam thru apertures | 57 |

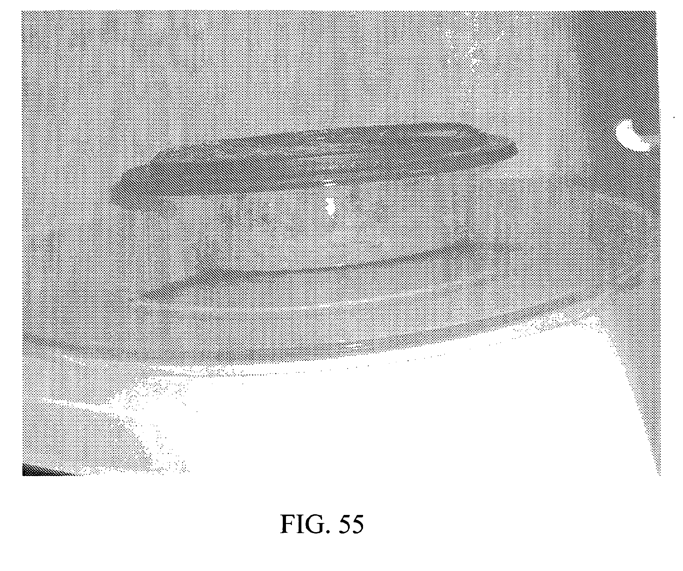

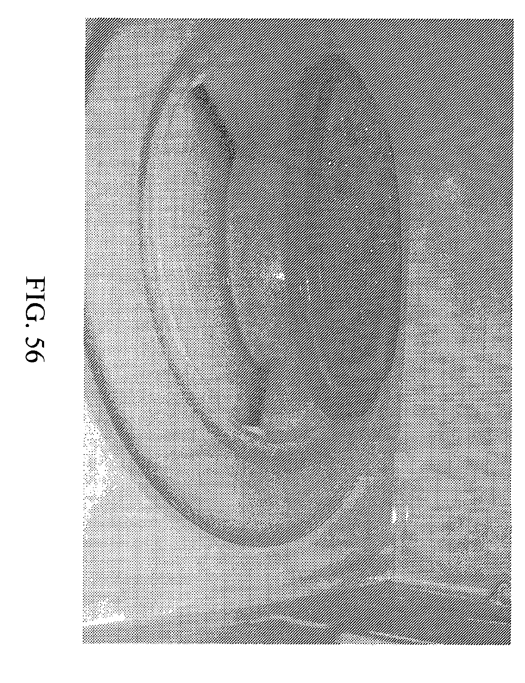

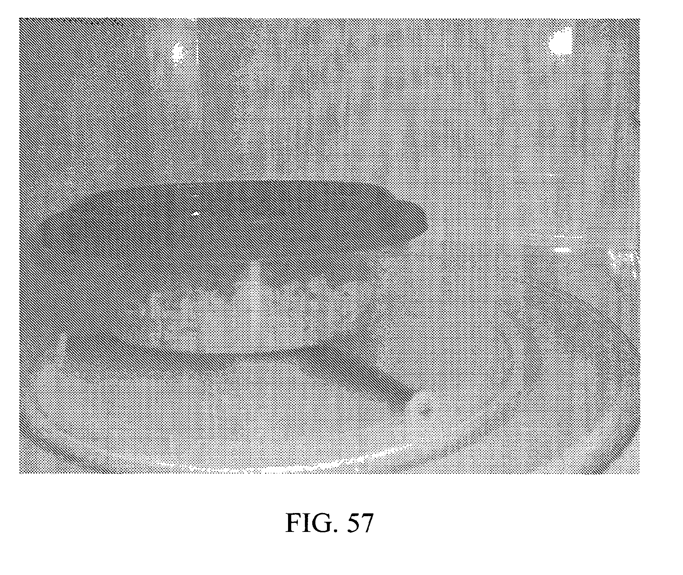

As shown in Table 3, no foam explosion was observed for Exp1. In contrast, all of the conventional anti-foaming agents that were tested exhibited a foam explosion time of 2-10 seconds. Figure 55 shows a significant amount of foam formation and vigorous foam though the apertures 512 in the cover 318. Figure 56 shows medium boil over in the pasta treated with anti-foam AMG. Figure 57 shows reduced foam formation and no foam on the cover 318 or through the apertures 512 in the cover 318 in the pasta meal treated with Exp1.

The meal treated with Exp1 was the only meal that did not boil over or exhibit foam through the apertures 512 in the cover 318. In contrast, the meals treated with the conventional anti-foaming agents exhibited at least vigorous foam through the apertures 512 in the cover 318 and light to medium boil over.

### Example 3

Fatty acids have a significantly more bitter taste than AMG and when used as an anti-foaming agent in a food product may impart a bitter flavor to the food product. The bitterness of fatty acid was tested and compared to the bitterness of AMG. After tasting several drops of fatty acid and AMG, a bitterness score (fatty acid to AMG) was assigned. Fatty acid was found to have a bitterness score of 95 and AMG was found to have a bitterness score of 5. Anti-foam functionality of the fatty acid and AMG was determined by treating the pasta surface as described in example 2 with fatty acid or AMG, heating the meal as described in example 2, observing the extent of foam through the apertures 512 in the cover 318, and assigning a functionality score based on the amount of form formation. Fatty acid was found to have a functionality score of 70 and AMG was found to have a functionality score of 30. Combinations of fatty acid and AMG were then tested for functionality and bitterness. For each combination, the percent of AMG and fatty acid was multiplied with its corresponding bitterness or functionality score to calculate a weighted average. The results are shown in Table 4.

**Table 4**

| **Anti-Foam Composition** | **Fatty Acid (% wt)** | **AMG (% wt)** | **Mono-diglycerides (% wt)** | **Functionality Score** | **Bitterness Score** |
|---|---|---|---|---|---|
| 1 | 100 | 0 | 0 | 70 | 95 |
| 2 | 0 | 100 | 0 | 30 | 5 |
| 3 | 40 | 40 | 20 | 40 | 40 |
| 4 | 50 | 30 | 20 | 44 | 49 |
| 5 | 60 | 20 | 20 | 48 | 58 |
| 6 | 65 | 15 | 20 | 50 | 62.5 |
| 7 | 70 | 10 | 20 | 52 | 67 |
| 8 | 75 | 5 | 10 | 54 | 71.5 |
| 9 | 80 | 10 | 10 | 59 | 76.5 |
| 10 | 85 | 5 | 10 | 61 | 81 |
| 11 | 90 | 5 | 5 | 64.5 | 85.75 |
| 12 | 30 | 50 | 20 | 36 | 31 |
| 13 | 20 | 60 | 20 | 32 | 22 |
| 14 | 45 | 35 | 20 | 42 | 44.5 |
| 15 | 45 | 30 | 25 | 40.5 | 44.25 |

Figure 58 shows a plot of bitterness score or functionality score versus fatty acid composition in Table 4. Surprisingly, it was found that the anti-foam compositions having bitterness scores and functionality scores around the intersection of the functionality plot with the bitterness plot, in particular compositions 3, 4, 12, 14 and 15, had anti-foam activities that were effective in preventing boil-over in the container assemblies of the present disclosure. It was determined that the anti-foam compositions in Table 4 having at least 30% fatty acid by weight exhibited the desired anti-foaming activity.

## Claims

1. A microwavable multi-component packaging system comprising:
a base container defining an interior cavity having an interior volume adapted for receiving an amount of a first food component and an amount of a fluid that is proportional to the amount of the first food component;
a cover releasably engaged with the base container, wherein the cover includes a passage portion defining a plurality of apertures; and
an anti-foam composition comprising:
a) about 20% to about 90% fatty acid by weight, about 5% to about 30% mono-diglyceride by weight, and about 5% to about 50% acetylated monoglyceride (AMG) by weight; or
b) about 5% to about 12% precipitated hydrophobised silica by weight, about 80% to about 90% vegetable oil by weight, about 4% to about 12% mono-diglyceride by weight, and about 1% to about 5% of an emulsifier by weight; or
c) about 20% to about 30% AMG by weight, about 40% to about 60% fatty acid by weight, and about 5% to about 10% precipitated hydrophobised silica by weight;
wherein an amount of the anti-foam composition is disposed on an interior surface of the base container, an interior surface of the cover, or a combination thereof.

2. A microwavable packaging system according to claim 1, wherein
the base container comprises a base wall and sidewall that cooperatively defines the interior cavity having an interior volume, the sidewall comprises a rim portion having a free end, wherein the interior cavity includes an amount of a first food component and is adapted to receive a proportional amount of the fluid;
and wherein an amount of the anti-foam composition is disposed on the first food component, an interior surface of the base container, an interior surface of the cover, or a combination thereof.

3. The microwavable packaging system of claim 1 or claim 2, wherein the base container comprises one or more of the following:
a) a base wall and sidewall that cooperatively define the interior cavity and the sidewall comprises a rim portion having a free end;
b) an indicium disposed on the sidewall indicating the amount of fluid to add to the base container prior to cooking, wherein the indicium comprises a vertical distance of about 1 cm to about 5 cm from the free end of the rim portion;
c) an interior cavity comprising an interior volume of about 8 oz. to about 32 oz. and a surface area of about 20 cm² to about 774 cm².

4. The microwavable packaging system any one of claims 1 to 3, further comprising an inner tray disposed within the interior cavity of the base container, wherein the tray is adapted to receive a second food component

5. The microwavable packaging system of claim 4, wherein the inner tray is adapted for inverted engagement with the base container such that a free edge of the inner tray is engaged with a free edge of the base container.

6. The microwavable packaging system of any one of claims 1 to 5, wherein the ratio of the fluid to the first food component is about 2:1 to about 6:1 or about 2.5:1 to about 3.5:1.

7. The microwavable packaging system of any one of claims 1 to 6, wherein the fluid comprises water.

8. The microwavable packaging system of any one of claims 1 to 7, comprising one or more of the following:
a) the anti-foam composition comprises fatty acid, wherein the fatty acid comprises oleic acid, palmitoleic acid, or a combination thereof;
b) the anti-foam composition comprises precipitated hydrophobised silica, wherein the precipitated hydrophobised silica comprises an average particle size of about 5 microns to about 10 microns;
c) the anti-foam composition comprises about 30% to about 80% fatty acid by weight, about 8% to about 30% mono-diglyceride by weight, and about 10% to about 40% AMG by weight;
d) the first food component comprises pasta, rice, beans, grains, or a combination thereof;
e) the first food component is at least partially dehydrated.

9. The microwavable packaging system of any one of claims 1 to 8, wherein the amount of anti-foam composition comprises less than about 1% of the dry weight of the first food component.

10. The microwavable packaging system of any one of claims 1 to 9, wherein the cover comprises one or more of the following:
a) a containment wall extending upwardly from a top surface of the cover, the containment wall defining a volume for retaining fluid that passes through the passage portion during cooking;
b) a plurality of apertures defining an open area that is greater than or equal to 2.5% of an effective area of the cover.

11. The microwavable packaging system of claim 10, wherein the inner volume of the containment wall comprises from about 10% to about 40% of the interior volume of the base container.

12. A composition for inhibiting foam formation during microwave cooking of a partially dehydrated starch-based food component in a fluid, the composition comprising about 30% to about 80% fatty acid by weight, about 8% to about 30% mono-diglyceride by weight, and about 10% to about 40% acetylated monoglyceride (AMG) by weight.

13. Use of the composition of claim 12, wherein when about 0.1 grams of the composition is added to about 10 grams of uncooked pasta in about 40 grams of water and the water is brought to a quick boil at 1 barr of pressure in an 1100 watt microwave oven, the foam generated by boiling the pasta in the water for about 3 minutes comprising a volume of less than about 25 cm³.

## Patentansprüche

1. Mikrowellen taugliches Mehrkomponenten-Verpackungs-System, umfassend:
einen Basis-Behälter, der einen inneren Hohlraum mit einem Innenvolumen, angepasst zum Aufnehmen einer Menge von einer ersten Lebensmittel-Komponente und einer Menge von einem Fluid, die zu der Menge von der ersten Lebensmittel-Komponente proportional ist, definiert;
eine Abdeckung, lösbar im Eingriff mit dem Basis-Behälter, wobei die Abdeckung ein Durchgangsteil, das eine Vielzahl von Öffnungen definiert, einschließt; und
eine Antischaum-Zusammensetzung, umfassend:
a) etwa 20% bis etwa 90 Gew.-% Fettsäure, etwa 5% bis etwa 30 Gew.-% Mono-diglycerid und etwa 5% bis etwa 50 Gew.-% acetyliertes Monoglycerid (AMG); oder
b) etwa 5 % bis etwa 12 Gew.-% ausgefälltes hydrophobiertes Siliciumdioxid, etwa 80% bis etwa 90 Gew.-% Pflanzenöl, etwa 4% bis etwa 12 Gew.-% Mono-diglycerid und etwa 1% bis etwa 5 Gew.-% von einem Emulgator; oder
c) etwa 20% bis etwa 30 Gew.-% AMG, etwa 40% bis etwa 60 Gew.-% Fettsäure und etwa 5% bis etwa 10 Gew.-% ausgefälltes hydrophobiertes Siliciumdioxid;
wobei eine Menge von der Antischaum-Zusammensetzung auf einer inneren Oberfläche von dem Basis-Behälter, einer inneren Oberfläche von der Abdeckung oder einer Kombination davon abgeschieden ist.

2. Mikrowellen taugliches Verpackungs-System nach Anspruch 1, wobei der Basis-Behälter eine Basis-Wand und Seiten-Wand umfasst, die zusammenwirkend den inneren Hohlraum mit einem Innenvolumen definieren, die Seiten-Wand ein Randteil mit einem freien Ende umfasst, wobei der innere Hohlraum eine Menge von einer ersten Lebensmittel-Komponente einschließt und angepasst ist, um eine proportionale Menge von dem Fluid aufzunehmen; und wobei eine Menge von der Antischaum-Zusammensetzung auf der ersten Lebensmittel-Komponente, einer inneren Oberfläche von dem Basis-Behälter, einer inneren Oberfläche von der Abdeckung oder einer Kombination davon abgeschieden ist.

3. Mikrowellen taugliches Verpackungs-System nach Anspruch 1 oder Anspruch 2, wobei der Basis-Behälter eines oder mehrere von Nachstehendem umfasst:
a) eine Basis-Wand und Seiten-Wand, die zusammenwirkend den inneren Hohlraum definieren und die Seiten-Wand ein Randteil mit einem freien Ende umfasst;
b) einen Vermerk, angeordnet auf der Seiten-Wand, welcher die Menge an Fluid anzeigt, die zu dem Basis-Behälter vor dem Garen zuzugeben ist, wobei der Vermerk einen vertikalen Abstand von etwa 1 cm bis etwa 5 cm von dem freien Ende von dem Randteil umfasst;
c) einen inneren Hohlraum, umfassend ein Innenvolumen von etwa 8 oz. bis etwa 32 oz. und eine Oberfläche von etwa 20 cm² bis etwa 774 cm².

4. Mikrowellen taugliches Verpackungs-System nach einem der Ansprüche 1 bis 3, weiterhin umfassend eine innere Schale, angeordnet innerhalb des inneren Hohlraums von dem Basis-Behälter, wobei die Schale so angepasst ist, dass sie eine zweite Lebensmittel-Komponente aufnehmen kann.

5. Mikrowellen taugliches Verpackungs-System nach Anspruch 4, wobei die innere Schale zum umgekehrten Eingriff mit dem Basis-Behälter angepasst ist, so dass eine freie Kante von der inneren Schale mit einer freien Kante von dem Basis-Behälter im Eingriff ist.

6. Mikrowellen taugliches Verpackungs-System nach einem der Ansprüche 1 bis 5, wobei das Verhältnis von dem Fluid zu der ersten Lebensmittel-Komponente etwa 2 : 1 bis etwa 6 : 1 oder etwa 2,5 : 1 bis etwa 3,5 : 1 ist.

7. Mikrowellen taugliches Verpackungs-System nach einem der Ansprüche 1 bis 6, wobei das Fluid Wasser umfasst.

8. Mikrowellen taugliches Verpackungs-System nach einem der Ansprüche 1 bis 7, umfassend eines oder mehrere von Nachstehendem:
a) die Antischaum-Zusammensetzung umfasst Fettsäure, wobei die Fettsäure Ölsäure, Palmitinsäure oder eine Kombination davon umfasst;
b) die Antischaum-Zusammensetzung umfasst ein ausgefälltes hydrophobiertes Siliciumdioxid, wobei das ausgefällte hydrophobierte Siliciumdioxid eine mittlere Teilchengröße von etwa 5 Mikrometer bis etwa 10 Mikrometer umfasst;
c) die Antischaum-Zusammensetzung umfasst etwa 30% bis etwa 80 Gew.-% Fettsäure, etwa 8% bis etwa 30 Gew.-% Mono-diglycerid und etwa 10% bis etwa 40 Gew.-% AMG;
d) die erste Lebensmittel-Komponente umfasst Nudeln bzw. Pasta, Reis, Bohnen, Körner oder eine Kombination davon;
e) die erste Lebensmittel-Komponente ist mindestens teilweise dehydratisiert.

9. Mikrowellen taugliches Verpackungs-System nach einem der Ansprüche 1 bis 8, wobei die Menge an Antischaum-Zusammensetzung weniger als etwa 1 % von dem Trockengewicht von der ersten Lebensmittel-Komponente umfasst.

10. Mikrowellen taugliches Verpackungs-System nach einem der Ansprüche 1 bis 9, wobei die Abdeckung eines oder mehrere von Nachstehendem umfasst:
a) eine Begrenzungswand, die sich aufwärts von einer oberen Oberfläche von der Abdeckung erstreckt, wobei die Begrenzungswand ein Volumen zum Aufnehmen von Fluid definiert, das durch das Durchgangsteil während des Garens gelangt;
b) eine Vielzahl von Öffnungen, die eine offene Fläche definiert, die größer als oder gleich ist mit 2,5% von einer effektiven Fläche von der Abdeckung.

11. Mikrowellen taugliches Verpackungs-System nach Anspruch 10, wobei das innere Volumen von der Begrenzungswand von etwa 10% bis etwa 40% von dem inneren Volumen von dem Basis-Behälter umfasst.

12. Zusammensetzung zum Hemmen der Schaum-Bildung während des Mikrowellen-Garens von einer teilweise dehydratisierten auf Stärke basierenden Lebensmittel-Komponente in einem Fluid, wobei die Zusammensetzung etwa 30% bis etwa 80 Gew.-% Fettsäure, etwa 8% bis etwa 30 Gew.-% Mono-diglycerid und etwa 10% bis etwa 40 Gew.-% acetyliertes Monoglycerid (AMG) umfasst.

13. Verwendung der Zusammensetzung nach Anspruch 12, wobei wenn etwa 0,1 Gramm von der Zusammensetzung zu etwa 10 Gramm von ungegarten Nudeln bzw. Pasta in etwa 40 Gramm Wasser gegeben werden und das Wasser zu einem schnellen Sieden bei 1 Bar Druck in einem 1100 Watt MikrowellenOfen gebracht wird, der durch das Kochen der Nudeln bzw. Pasta in dem Wasser für etwa 3 Minuten erzeugte Schaum ein Volumen von weniger als etwa 25 cm³ umfasst.

## Revendications

1. Système d'emballage multi-composants pour cuisson aux micro-ondes comprenant :
un récipient de base définissant une cavité intérieure ayant un volume intérieur adapté pour recevoir une quantité d'un premier composant alimentaire et une quantité d'un fluide qui est proportionnelle à la quantité du premier composant alimentaire ;
un couvercle engagé de manière libérable avec le récipient de base, dans lequel le couvercle comprend une partie de passage définissant une pluralité d'ouvertures ; et
une composition antimousse comprenant :
a) environ 20 % à environ 90 % d'acide gras en poids, environ 5 % à environ 30 % de mono-diglycéride en poids, et environ 5 % à environ 50 % de monoglycéride acétylé (AMG) en poids ; ou
b) environ 5 % à environ 12 % de silice hydrophobisée précipitée en poids, environ 80 % à environ 90 % d'huile végétale en poids, environ 4 % à environ 12 % de mono-diglycéride en poids, et environ 1 % à environ 5 % d'un émulsifiant en poids ; ou
c) environ 20 % à environ 30 % d'AMG en poids, environ 40 % à environ 60 % d'acide gras en poids, et environ 5 % à environ 10 % de silice hydrophobisée précipitée en poids ;
dans lequel une quantité de la composition antimousse est disposée sur une surface intérieure du récipient de base, une surface intérieure du couvercle, ou une combinaison de celles-ci.

2. Système d'emballage pour cuisson aux micro-ondes selon la revendication 1, dans lequel le récipient de base comprend une paroi de base et une paroi latérale qui définissent de façon coopérative la cavité intérieure ayant un volume intérieur, la paroi latérale comprend une partie de rebord ayant une extrémité libre, dans lequel la cavité intérieure comprend une quantité d'un premier composant alimentaire et est adaptée pour recevoir une quantité proportionnelle du fluide ;
et dans lequel une quantité de la composition antimousse est disposée sur le premier composant alimentaire, une surface intérieure du récipient de base, une surface intérieure du couvercle, ou une combinaison de ceux-ci.

3. Système d'emballage pour cuisson aux micro-ondes de la revendication 1 ou la revendication 2, dans lequel le récipient de base comprend un ou plusieurs des suivants :
a) une paroi de base et une paroi latérale qui définissent de façon coopérative la cavité intérieure et la paroi latérale comprend une partie de rebord ayant une extrémité libre ;
b) un indice disposé sur la paroi latérale indiquant la quantité de fluide à ajouter au récipient de base avant cuisson, dans lequel l'indice comprend une distance verticale d'environ 1 cm à environ 5 cm depuis l'extrémité libre de la partie de rebord ;
c) une cavité intérieure comprenant un volume intérieur d'environ 8 onces à environ 32 onces et une surface d'environ 20 cm² à environ 774 cm².

4. Système d'emballage pour cuisson aux micro-ondes de l'une quelconque des revendications 1 à 3, comprenant en outre un plateau interne disposé dans la cavité intérieure du récipient de base, dans lequel le plateau est adapté pour recevoir un deuxième composant alimentaire.

5. Système d'emballage pour cuisson aux micro-ondes de la revendication 4, dans lequel le plateau interne est adapté pour engagement inversé avec le récipient de base de sorte qu'un bord libre du plateau interne soit engagé avec un bord libre du récipient de base.

6. Système d'emballage pour cuisson aux micro-ondes de l'une quelconque des revendications 1 à 5, dans lequel le rapport du fluide au premier composant alimentaire est d'environ 2:1 à environ 6:1 ou d'environ 2,5:1 à environ 3,5:1.

7. Système d'emballage pour cuisson aux micro-ondes de l'une quelconque des revendications 1 à 6, dans lequel le fluide comprend de l'eau.

8. Système d'emballage pour cuisson aux micro-ondes de l'une quelconque des revendications 1 à 7, comprenant un ou plusieurs des suivants :
a) la composition antimousse comprend un acide gras, dans lequel l'acide gras comprend l'acide oléique, l'acide palmitoléique, ou une combinaison de ceux-ci ;
b) la composition antimousse comprend de la silice hydrophobisée précipitée, dans lequel la silice hydrophobisée précipitée comprend une taille de particule moyenne d'environ 5 microns à environ 10 microns ;
c) la composition antimousse comprend environ 30 % à environ 80 % d'acide gras en poids, environ 8 % à environ 30 % de mono-diglycéride en poids, et environ 10 % à environ 40 % d'AMG en poids ;
d) le premier composant alimentaire comprend des pâtes, du riz, des fèves, des céréales, ou une combinaison de ceux-ci ;
e) le premier composant alimentaire est au moins partiellement déshydraté.

9. Système d'emballage pour cuisson aux micro-ondes de l'une quelconque des revendications 1 à 8, dans lequel la quantité de composition antimousse comprend moins d'environ 1 % du poids sec du premier composant alimentaire.

10. Système d'emballage pour cuisson aux micro-ondes de l'une quelconque des revendications 1 à 9, dans lequel le couvercle comprend un ou plusieurs des suivants :
a) une paroi de confinement s'étendant vers le haut depuis une surface supérieure du couvercle, la paroi de confinement définissant un volume pour retenir du fluide qui traverse la partie de passage pendant la cuisson ;
b) une pluralité d'ouvertures définissant une aire ouverte qui est supérieure ou égale à 2,5 % d'une aire efficace du couvercle.

11. Système d'emballage pour cuisson aux micro-ondes de la revendication 10, dans lequel le volume interne de la paroi de confinement comprend d'environ 10 % à environ 40 % du volume intérieur du récipient de base.

12. Composition pour inhiber la formation de mousse pendant la cuisson aux micro-ondes d'un composant alimentaire à base d'amidon partiellement déshydraté dans un fluide, la composition comprenant environ 30 % à environ 80 % d'acide gras en poids, environ 8 % à environ 30 % de mono-diglycéride en poids, et environ 10 % à environ 40 % de monoglycéride acétylé (AMG) en poids.

13. Utilisation de la composition de la revendication 12, dans laquelle lorsque environ 0,1 gramme de la composition est ajouté à environ 10 grammes de pâtes non cuites dans environ 40 grammes d'eau et que l'eau est amenée à ébullition rapide à 1 bar de pression dans un four à micro-ondes de 1100 watts, la mousse générée par ébullition des pâtes dans l'eau pendant environ 3 minutes comprend un volume inférieur à environ 25 cm³.
